# EUROPEAN PATENT SPECIFICATION

(11) **EP 2 026 788 B1**
(45) Date of publication and mention of the grant of the patent: **26.10.2011**
(21) Application number: 07725884.6
(22) Date of filing: 06.06.2007
(51) Int. Cl.: A61K 31/165, A61P 21/00, A61P 19/00, A61K 31/00

(54) **THERAPEUTIC COMBINATION FOR PAINFUL MEDICAL CONDITIONS**
THERAPEUTISCHE KOMBINATION FÜR SCHMERZHAFTE MEDIZINISCHE ZUSTÄNDE
COMBINAISON THÉRAPEUTIQUE POUR ÉTATS MÉDICAUX DOULOUREUX

(30) Priority: 08.06.2006 US 811840 P; 08.06.2006 US 811859 P; 18.08.2006 US 506524; 18.08.2006 US 506523; 18.08.2006 US 506577; 18.08.2006 US 506578; 18.08.2006 WO PCT/EP2006/008171
(43) Date of publication of application: 25.02.2009
(73) Proprietor: UCB Pharma GmbH, 40789 Monheim (DE)
(72) Inventor: BEYREUTHER, Bettina, 40219 Düsseldorf (DE); STÖHR, Thomas, 40789 Monheim (DE)
(74) Representative: Weiss, Wolfgang
(86) International application number: PCT/EP2007/005036
(87) International publication number: WO 2007/141018

(56) References cited:
- WO-A-02/074784
- WO-A-2005/110405
- BEYREUTHER ET AL: "Antinociceptive efficacy of lacosamide in a rat model for painful diabetic neuropathy" EUROPEAN JOURNAL OF PHARMACOLOGY, AMSTERDAM, NL, vol. 539, no. 1-2, 6 June 2006 (2006-06-06), pages 64-70, XP005465800 ISSN: 0014-2999
- STOHR ET AL: "Lacosamide displays potent antinociceptive effects in animal models for inflammatory pain" EUROPEAN JOURNAL OF PAIN, SAUNDERS, LONDON, GB, vol. 10, no. 3, April 2006 (2006-04), pages 241-249, XP005293235 ISSN: 1090-3801

## Description

### FIELD OF THE INVENTION

The present invention relates to therapeutic combinations and the use of such combinations for the preparation of a medicament for the treatment of medical conditions, more particularly such conditions, including arthritic conditions, where pain is present.

### BACKGROUND OF THE INVENTION

By 2020, it is estimated that 60 million Americans will suffer from arthritis. Arthritis is the leading cause of physical disability (defined broadly as needing assistance in walking or climbing stairs) and of restricted daily activity in more than 7 million Americans, and this number is expected to grow to more than 11.6 million by 2020. See http://www.arthritis.org/resources/ ActionPlanInterior.pdf.

It is very costly to treat arthritis and its complications. In 1997, the total cost of arthritis and other rheumatic conditions in the United States was $86 billion. The direct medical costs of arthritis and other rheumatic conditions in 1997 were $51.1 billion. The indirect costs (due to lost wages) of arthritis and other rheumatic condition in 1997 were $35.1 billion. See http://www.cdc.gov/mmwr/preview/mmwrhtml/mm5318a3.htm.

Rheumatoid arthritis is a chronic disease mainly characterized by inflammation of the lining, or synovium, of the joints. It can lead to long-term joint damage, resulting in chronic pain, loss of function and disability. Rheumatoid arthritis affects about 1% of the U.S. population or 2.1 million Americans.

Rheumatoid arthritis progresses in three stages. The first stage includes swelling of the synovial lining, causing pain, warmth, stiffness, redness and swelling around the joint. The second stage includes rapid division and growth of cells, or pannus, which causes the synovium to thicken. In the third stage, the inflamed cells release enzymes that may digest bone and cartilage, often causing the involved joint to lose its shape and alignment, more pain, and loss of movement.

Because rheumatoid arthritis is a systemic disease, it can also affect other organs in the body. Early diagnosis and treatment of rheumatoid arthritis is critical to continue living a productive lifestyle. Studies have shown that early aggressive treatment of rheumatoid arthritis can limit joint damage, which in turn limits loss of movement, decreased ability to work, higher medical costs and potential surgery. See http://www.arthritis.org/conditions/DiseaseCenter/RA/ra overview.asp.

Osteoarthritis is an acquired musculoskeletal disorder that is believed to be non-inflammatory in origin, occurring when the rate of cartilage degradation exceeds that of regeneration, resulting in cartilage erosion, subchondral bone thickening, and joint damage. As cartilage thins, its surface integrity can be lost, clefts can form, and the cartilage tends to be more easily eroded with joint motion. As new cartilage is formed, it tends to be more fibrous and less able to withstand mechanical stress. Over time, underlying bone can be exposed that is less capable of withstanding mechanical stress, resulting in microfractures. Localized osteonecrosis can occur beneath the bone surface, leading to cysts that can further weaken the bone's support of the cartilage.

As osteoarthritis progresses, it can eventually influence structures surrounding the joint. Local inflammation such as synovitis can occur, for example in response to inflammatory mediators released during the cartilage degradation process. The joint capsule tends to thicken, and movement of nutrients into and metabolic waste products out of the joint can be restricted. Eventually, periarticular muscle wasting can become evident as osteoarthritis progresses, and the joint is used less often or improperly. Pain of osteoarthritis is thought to be due not to cartilage degradation *per se* but to effects on surrounding structures including bone, since cartilage is aneural.

According to the Centers for Disease Control and Prevention (CDC), osteoarthritis is the most common form of arthritic disease, affecting 21 million Americans. See http://www.cdc.gov/arthritis/data_statistics/arthritis_related_statistics.htm#2.

The prevalence of osteoarthritis increases with age, and age is the largest risk factor. A survey reported by Brandt (2001) Principles of Internal Medicine, 15th ed. (Braunwald et al., eds.), New York: McGraw-Hill, pp. 1987-1994, found that only 2% of women less than 45 years old had radiographic evidence of osteoarthritis. In women aged 45 to 64 years, however, the prevalence was 30%, and for those 65 years or older it was 68%. Other risk factors include excess body weight, genetics, estrogen deficiency, repetitive joint use, and trauma.

A typical patient with osteoarthritis is middle-aged or elderly and complains of pain in the knee, hip, hand or spine. The distal and proximal interphalangeal joints of the hands are the most common sites of osteoarthritis but also the least likely to be exhibit symptoms. The hip and knee are the second and third most common joints seen on X-ray to be affected, with knee pain being more likely to exhibit symptoms.

Pain is the paramount symptom of osteoarthritis. Osteoarthritic pain can have one or both of an inflammatory and a non-inflammatory component. Anti-inflammatory agents such as NSAIDs (non-steroidal anti-inflammatory drugs) and cyclooxygenase-2 inhibitors can be useful in treating or managing the inflammatory component, while opioid and other analgesics can be useful in treating or managing the non-inflammatory component. However, such drug therapies are not always effective and have side-effects that may not be well tolerated in all patients.

Non-inflammatory pain is often characterized by absence of swelling or warmth, absence of inflammatory or systemic features, and minimal or no morning stiffness.

Non-inflammatory osteoarthritic pain can contribute to a sedentary lifestyle, depression and sleep problems, particularly in the elderly. The pain is often characterized as a deep, aching sensation that intensifies with motion. It is usually intermittent and often mild, but can become persistent and severe. Crepitus is usually noted in the affected joints.

Certain peptides are known to exhibit central nervous system (CNS) activity and are useful in the treatment of epilepsy and other CNS disorders. Such peptides are described, for example, in U.S. Patent No. 5,378,729.

Related peptides are disclosed in U.S. Patent No. 5,773,475 as useful for treating CNS disorders.

Beyreuther et al. (European Journal of Pharmacology 2006, 539:64-70) describe the antinociceptive efficacy of lacosamide in a rat model for painful diabetic neuropathy, in comparison to drugs commonly used in the treatment of diabetic neuropathic pain.

WO 2005/110405 describes combinations for affecting weight loss comprising a first compound and a second compound, wherein the first compound is an antidiabetic, and the second compound is an anticonvulsant. Examples of the anticonvulsants include lacosamide.

International Patent Publication No. WO 02/074784, incorporated herein by reference in its entirety, relates to use of such peptide compounds having antinociceptive properties, for treatment of different types and symptoms of acute and chronic pain, especially non-neuropathic inflammatory pain, *e.g*., rheumatoid arthritic pain or secondary inflammatory osteoarthritic pain.

International Patent Publication No. WO 02/074297 relates to treatment of allodynia related to peripheral neuropathic pain, using a compound of formula 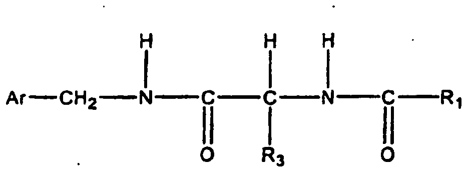 where Ar is a phenyl group that is unsubstituted or substituted with at least one halo substituent; R₃ is C₁₋₃ alkoxy; and R₁ is methyl.

Lacosamide (also called SPM 927 or harkoseride) is a compound of the above formula that has a mode of action which is not fully understood (Bialer et al. (2002) Epilepsy Res. 51:31-71). The mode of action of lacosamide and other peptide compounds disclosed in the above-referenced patents and publications differs from that of common antiepileptic drugs. Ion channels are not affected by these compounds in a manner comparable to other known antiepileptic drugs. For example, gamma-aminobutyric acid (GABA) induced currents are potentiated, but no direct interaction with any known GABA receptor subtype has been observed. Glutamate induced currents are attenuated but the compounds do not directly interact with any known glutamate receptor subtype.

A need remains for improved therapies that can treat medical conditions, for example arthritic conditions, having pain, especially non-inflammatory pain, as a symptom thereof.

### SUMMARY OF THE INVENTION

There is now provided a therapeutic combination comprising a first agent that comprises lacosamide, (R)-2-acetamido-N-benzyl-3-methyoxypropionamide, and a second agent effective in combination therewith to provide enhanced treatment of pain associated with or caused by a medical condition, by comparison with the first agent alone; ; the second agent comprising one or more drugs independently selected from the group consisting of duloxetine, morphine and memantine.

The medical condition in one embodiment is a condition wherein non-inflammatory pain is present. The medical condition can be, for example, an arthritic condition.

The first agent and second agent can be provided separately or in a single dosage form. Accordingly, in one embodiment, a pharmaceutical dosage form is provided, comprising a first agent and a second agent as defined above.

There is further provided a method for treating a painful medical condition and/or pain related thereto in a subject, the method comprising administering to the subject a therapeutic combination as described above.

Described herein is a method for treating an arthritic condition and/or pain related thereto in a subject, the method comprising administering to the subject a therapeutic combination as described above, wherein the second agent comprises one or more anti-arthritis drugs.

Other embodiments, including particular aspects of the embodiments summarized above, will be evident from the detailed description that follows.

### BRIEF DESCRIPTION OF THE DRAWINGS

In Figs. 1-4, "SPM 927" refers to lacosamide.
Fig. 1 is a graphical representation of results of the study of Example 1, showing effect of lacosamide at 3, 10 and 30 mg/kg on muscle pressure hyperalgesia induced by TNF.
Fig. 2 is a graphical representation of results of the study of Example 1, showing maximal possible effect (MPE) of lacosamide at 3, 10 and 30 mg/kg, in comparison to pregabalin, gabapentin and metamizol (dipyrone), on muscle pressure hyperalgesia induced by TNF.
Fig. 3 is a graphical representation of results of the study of Example 1, effect of lacosamide at 3, 10 and 30 mg/kg on biceps muscle grip strength after TNF-induced muscle pain.
Fig. 4 is a graphical representation of results of the study of Example 1, showing maximal possible effect (MPE) of lacosamide at 3, 10 and 30 mg/kg, in comparison to pregabalin, gabapentin and metamizol (dipyrone), on biceps muscle grip strength after TNF-induced muscle pain.
Figs. 5A-C are graphical representations of results of the study of Example 2, showing effects of lacosamide and morphine on monosodium iodoacetate-induced tactile allodynia at days 3, 7 and 14 of the study respectively.
Figs. 6A-C are graphical representations of results of the study of Example 2, showing effect of diclofenac on monosodium iodoacetate-induced tactile allodynia at days 3, 7 and 14 of the study respectively.
Figs. 7A-C are graphical representations of results of the study of Example 2, showing effects of lacosamide and morphine on monosodium iodoacetate-induced mechanical hyperalgesia at days 3, 7 and 14 of the study respectively.
Figs. 8A-C are graphical representations of results of the study of Example 2, showing effect of diclofenac on monosodium iodoacetate-induced mechanical hyperalgesia at days 3, 7 and 14 of the study respectively.

### DETAILED DESCRIPTION

Therapeutic combinations, pharmaceutical dosage forms and methods of use of such combinations and dosage forms for treating arthritic conditions and/or pain related thereto are provided.

The term "therapeutic combination" refers to a plurality of agents that, when administered to a subject together or separately, are co-active in bringing therapeutic benefit to the subject. Such administration is referred to as "combination therapy," "co-therapy," "adjunctive therapy" or "add-on therapy." For example, one agent can potentiate or enhance the therapeutic effect of another, or reduce an adverse side effect of another, or one or more agents can be effectively administered at a lower dose than when used alone, or can provide greater therapeutic benefit than when used alone, or can complementarily address different aspects, symptoms or etiological factors of a disease or condition.

A "medical condition" herein can be a disease, disorder or syndrome, typically one that has been clinically diagnosed. Medical conditions addressed by the present invention are accompanied by pain, or have pain as a symptom thereof, and are referred to herein as "painful medical conditions". The pain may be inflammatory or non-inflammatory in nature, or can have both inflammatory and non-inflammatory components. Many arthritic conditions, for example, have both non-inflammatory and inflammatory pain components.

Non-limiting examples of medical conditions and/or types of pain for which the present therapeutic combinations and methods can be useful include those listed immediately below, recognizing that many of the conditions and types of pain listed are overlapping:
- acute inflammatory pain;
- acute pain;
- alcoholism-associated or alcoholism-induced neuropathic pain;
- allodynia (occurring independently or as a symptom of another condition);
- arthritic conditions;
- back pain;
- cancer-related neuropathic pain, e.g., painful compression by tumor growth of adjacent nerves, the brain or the spinal cord;
- central neuropathic pain;
- chronic headache;
- chronic inflammatory pain;
- chronic pain;
- chronic pain due to peripheral nerve injury;
- diabetes-associated or diabetes-induced neuropathic pain;
- diabetic pain;
- diabetic distal sensory neuropathy;
- diabetic distal sensory polyneuropathy;
- fibromyalgia;
- headache;
- hyperalgesia (occurring independently or as a symptom of another condition);
- hyperesthesia;
- hyperpathia;
- migraine, including classical migraine and common migraine;
- myalgia;
- myofascial pain syndrome;
- neuralgia;
- neuroma;
- non-inflammatory musculoskeletal pain;
- non-inflammatory osteoarthritic pain;
- non-neuropathic inflammatory pain;
- neuropathic pain;
- pain associated with or induced by chemotherapy or radiation therapy;
- pain associated with or induced by traumatic nerve injury or compression or by traumatic injury to the brain or spinal cord;
- painful diabetic neuropathy;
- peripheral neuropathic pain;
- persistent clinical pain;
- phantom pain;
- rheumatoid arthritis pain;
- secondary inflammatory osteoarthritic pain;
- trigeminal neuralgia; and
- vascular headache.

An "arthritic condition" herein is a musculoskeletal disorder, usually accompanied by pain, of one or more joints of a subject, and includes arthritis associated with or secondary to conditions that are not necessarily primarily arthritic. Among the most important arthritic conditions are osteoarthritis, which can be idiopathic or primary in origin, or secondary to other conditions; and rheumatoid arthritis, including juvenile rheumatoid arthritis. Other disorders embraced herein as "arthritic conditions" include without limitation psoriatic arthritis, infectious arthritis, ankylosing spondylitis, neurogenic arthropathy and polyarthralgia. Conditions to which arthritis can be secondary include without limitation Sjögren's syndrome, Behçet's syndrome, Reiter's syndrome, systemic lupus erythematosus, rheumatic fever, gout, pseudogout, Lyme disease, sarcoidosis and ulcerative colitis.

Pain related to arthritis, for example in osteoarthritis, can be inflammatory or non-inflammatory or both. Non-inflammatory osteoarthritic pain is a specific type of non-inflammatory musculoskeletal pain which typically arises from effects of osteoarthritis-related morphological alterations, such as cartilage degradation, bone changes on sensory neurons, and vascularization of bone remodeling. It is distinguished herein from inflammatory osteoarthritic pain, which typically occurs from synovial inflammation following pathological processes in cartilage and bone involving tissue damage and macrophage infiltration (resulting in edema) associated with a classical immune system response.

Stöhr et al. (2006) Eur. J. Pain 10(3):241-249 describes results showing effectiveness of lacosamide for treating inflammatory pain.

Unless the context demands otherwise, the term "treat," "treating" or "treatment" herein includes preventive or prophylactic use of a combination, for example a combination of a first agent and second agent as defined herein, in a subject at risk of, or having a prognosis including, a medical condition having non-inflammatory pain as a symptom thereof, *e.g*., an arthritic condition such as osteoarthritis, as well as use of such a combination in a subject already experiencing such a condition, as a therapy to alleviate, relieve, reduce intensity of or eliminate the condition or pain associated therewith or an underlying cause thereof.

The term "subject" refers to a warm-blooded animal, generally a mammal such as, for example, a cat, dog, horse, cow, pig, mouse, rat or primate, including a human. In one embodiment the subject is a human, for example a patient having a clinically diagnosed arthritic condition.

The term "synergism", "synergistic effect", "enhanced prevention", "enhanced alleviation" or "enhanced treatment" refers to a stronger therapeutic effect of a combination of two or more compounds in comparison with the additive effects of the compounds alone. For example, a therapeutic combination as described herein may have a synergistic effect in the prevention, alleviation or/and treatment of pain associated with or caused by a medical condition as described herein.

A therapeutic combination as described herein may also have a synergistic effect in reduction of side effects or/and toxicity if administered in the prevention, alleviation or/and treatment of a medical condition as described herein or pain associated with or caused by a medical condition as described herein.

In one embodiment, lacosamide is substantially enantiopure. As used herein, the term "substantially enantiopure" means having at least 88%, preferably at least 90%, more preferably at least 95%, 96%, 97%, 98% or 99% enantiomeric purity.

Illustrative compounds described herein include:
(R)-2-acetamido-N-benzyl-3-ethoxypropionamide;
O-methyl-N-acetyl-D-serine-m-fluorobenzylamide;
O-methyl-N-acetyl-D-serine-p-fluorobenzylamide;
N-acetyl-D-phenylglycinebenzylamide;
D-1,2-(N,O-dimethylhydroxylamino)-2-acetamido acetic acid benzylamide; and
D-1,2-(O-methylhydroxylamino)-2-acetamido acetic acid benzylamide.

Depending upon the substituents, certain of the present compounds may form salts. Such salts can have enhanced water solubility and may be particularly useful in preparing pharmaceutical compositions for use in situations where enhanced water solubility is advantageous.

Pharmaceutically acceptable salts are those having therapeutic efficacy without unacceptable toxicity. Salts of inorganic acids such as hydrochloric, hydroiodic, hydrobromic, phosphoric, metaphosphoric, nitric and sulfuric acids as well as salts of organic acids such as tartaric, acetic, citric, malic, benzoic, perchloric, glycolic, gluconic, succinic, arylsulfonic (*e*.*g*., p-toluene sulfonic, benzenesulfonic), phosphoric and malonic acids and the like, can be used.

A compound as described herein is used in a therapeutically effective amount. A physician can determine a suitable dosage of a compound, which can vary with the particular compound chosen, the route and method of administration, and the age and other characteristics of the individual patient. The physician can initiate treatment with small doses, for example substantially less than an optimum dose of the compound, and increase the dose by small increments until an optimum effect under the circumstances is achieved. When the composition is administered orally, larger quantities of the compound may be required to produce the same therapeutic benefit as a smaller quantity given parenterally.

In a particular aspect lacosamide, is administered in an amount ranging from about 1 mg to about 10 mg per kilogram of body weight per day. Typically a patient can be treated with the compound, for example lacosamide, at a dose of at least about 50 mg/day, for example at least about 100 mg/day, at least about 200 mg/day, at least about 300 mg/day or at least about 400 mg/day. Generally, a suitable dose is not greater than about 6 g/day, for example not greater than about 1 g/day or not greater than about 600 mg/day. In some cases, however, higher or lower doses may be needed.

In another aspect, the daily dose is increased until a predetermined daily dose is reached which is maintained during further treatment.

In yet another aspect, several divided doses are administered daily. For example, no more than three doses per day, or no more than two doses per day, may be administered. However, it is often most convenient to administer no more than a single dose per day.

Doses expressed herein on a daily basis, for example in mg/day, are not to be interpreted as requiring a once-a-day frequency of administration. For example, a dose of 300 mg/day can be given as 100 mg three times a day, or as 600 mg every second day.

In yet another aspect, an amount of lacosamide, is administered which results in a plasma concentration of the compound of about 0.1 to about 15 µg/ml (trough) and about 5 to about 18.5 µg/ml (peak), calculated as an average over a plurality of treated subjects.

Lacosamide can be administered in any convenient and effective manner, such as by oral, intravenous, intraperitoneal, intramuscular, intrathecal, subcutaneous or transmucosal (*e.g*., buccal) routes. Oral or intravenous administration is generally preferred.

For oral administration, the compound is typically administered as a component of an orally deliverable pharmaceutical composition that further comprises an inert diluent or an assimilable edible carrier, or it may be incorporated into the subject's food. In an orally deliverable pharmaceutical composition, the compound can be incorporated together with one or more excipients and administered in the form of tablets, troches, pills, capsules, elixirs, suspensions, syrups, wafers, or the like. Such compositions typically contain at least about 1%, more typically about 5% to about 80%, by weight of the compound, for example lacosamide. The amount of the compound in the composition is such that, upon administration of the composition, a suitable dosage as set forth above can conveniently be provided. Illustratively, a pharmaceutical composition useful for oral delivery of lacosamide, contains about 10 mg to about 6 g, for example about 50 to about 1000 mg, or about 100 to about 600 mg, of the compound.

In particular embodiments the composition is enclosed in hard or soft shell (*e.g*., gelatin) capsules, or is in a form of compressed or molded tablets. The composition illustratively comprises as excipients one or more of a diluent such as lactose or dicalcium phosphate (in the case of capsules a liquid carrier can be present); a binding agent such as gum tragacanth, acacia, corn starch or gelatin; a disintegrating agent such as corn starch, potato starch, alginic acid or the like; a lubricant such as magnesium stearate; and a sweetening agent such as sucrose or saccharin and/or a flavoring agent such as peppermint, oil of wintergreen, or cherry flavoring can be added if desired.

Various other excipients may be present as coatings or otherwise modifying the physical form of the composition. For example, tablets, pills, or capsules may be coated with shellac, sugar or both. A syrup or elixir may contain the active compound, sucrose as a sweetening agent, methyl- and propylparabens as preservatives, a dye, and flavoring such as cherry or orange flavor. The active compound can be incorporated into a sustained-release formulation. For example, sustained-release dosage forms are contemplated wherein the compound is bound to an ion exchange resin which, optionally, can be coated with a diffusion barrier coating to modify the release properties of the resin.

Pharmaceutical compositions suitable for injectable use include sterile aqueous solutions (where the compound is water soluble), dispersions, and sterile powders for extemporaneous preparation of sterile injectable solutions or dispersions. In such cases the injectable composition must be sterile and must be sufficiently fluid to permit easy syringeability. The composition must be stable under the conditions of manufacture and storage and must typically be preserved against the contaminating action of microorganisms such as bacteria and fungi. The carrier can be a solvent or dispersion medium containing, for example, water, ethanol, polyol (for example, glycerol, propylene glycol, liquid polyethylene glycol, or the like), suitable mixtures thereof, and vegetable oils. Proper fluidity can be maintained, for example, by use of a coating such as lecithin, by maintenance of a required particle size in the case of dispersions, and by use of surfactants. Microbial action can be inhibited by various antibacterial and antifungal agents, for example, parabens, chlorobutanol, phenol, sorbic acid, thimerosal, or the like. In many cases, it will be preferable to include tonicity agents, for example, sugars or sodium chloride, to provide a substantially isotonic liquid for injection. Prolonged absorption of injectable compositions can be brought about by use in the compositions of agents delaying absorption, for example aluminum monostearate or gelatin.

Sterile injectable solutions can be prepared by incorporating the active compound in a required amount in an appropriate solvent with various of the other ingredients mentioned above, as required, followed by filtered sterilization. Generally, dispersions are prepared by incorporating sterilized active compound into a sterile vehicle which contains the dispersion medium and other excipient ingredients such as those mentioned above. Sterile powders for preparation of sterile injectable solutions can be prepared by vacuum-drying or freeze-drying a previously sterile-filtered solution or dispersion.

The therapeutic combination of the invention comprises, in addition to the first agent as described above, a second agent effective in combination therewith to provide enhanced treatment of pain associated with or caused by a medical condition, by comparison with first agent alone; the second agent comprising one or more drugs selected from the group consisting of duloxetine, morphine and memantine.

Described herein is a second agent comprising an anti-arthritis drug and the combination is useful for treating an arthritic condition and/or pain related thereto. More than one anti-arthritis drug can optionally be present in the second agent.

An "anti-arthritis drug" is a drug having effectiveness in treatment (including prevention) of any aspect, symptom (*e*.*g*., pain or inflammation) and/or an underlying cause of an arthritic condition as defined herein.

For example, an anti-arthritis drug included in or as the second agent can be effective for treatment of pain, *i.e*., analgesia. Suitable analgesics include opioid and non-opioid analgesics as well as certain anti-inflammatory drugs (see immediately below). A combination comprising lacosamide, and an opioid or non-opioid analgesic can be useful in any arthritic condition accompanied by pain, in particular where such pain has a non-inflammatory component as in osteoarthritis.

Alternatively or in addition, an anti-arthritis drug included in or as the second agent can be effective for treatment of inflammation and/or pain related thereto. Suitable anti-inflammatories include steroidal and nonsteroidal anti-inflammatory drugs. Nonsteroidal anti-inflammatory drugs (NSAIDs) include traditional NSAIDs and cyclooxygenase-2 (COX-2) selective inhibitors, A combination comprising lacosamide, and an anti-inflammatory can be useful in any arthritic condition accompanied by inflammatory pain or where both inflammatory and non-inflammatory types of pain are present.

Nonlimiting examples of opioid and non-opioid analgesics that can be useful in the second agent include acetaminophen, alfentanil, allylprodine, alphaprodine, anileridine, benzylmorphine, bezitramide, buprenorphine, butorphanol, clonitazene, codeine, cyclazocine, desomorphine, dextromoramide, dextropropoxyphene, dezocine, diampromide, diamorphone, dihydrocodeine, dihydromorphine, dimenoxadol, dimepheptanol, dimethylthiambutene, dioxaphetyl butyrate, dipipanone, dipyrone (metamizol), eptazocine, ethoheptazine, ethylmethylthiambutene, ethylmorphine, etonitazene, fentanyl, heroin, hydrocodone, hydromorphone, hydroxypethidine, isomethadone, ketobemidone, levallorphan, levorphanol, levophenacyl-morphan, lofentanil, meperidine, meptazinol, metazocine, methadone, metopon, morphine, myrophine, nalbuphine, nalorphine, narceine, nicomorphine, norlevorphanol, normethadone, normorphine, norpipanone, opium, oxycodone, oxymorphone, papaveretum, pentazocine, phenadoxone, phenazocine, phenomorphan, phenopeidine, piminodine, piritramide, proheptazine, promedol, properidine, propiram, propoxyphene, sufentanil, tilidine, tramadol, NO-naproxen, NCX-701, ALGRX-4975, pharmaceutically acceptable salts thereof, and combinations thereof.

Nonlimiting examples of steroidal anti-inflammatories that can be useful in the second agent include alclometasone, amcinonide, betamethasone, betamethasone 17-valerate, clobetasol, clobetasol propionate, clocortolone, cortisone, dehydrotestosterone, deoxycorticosterone, desonide, desoximetasone, dexamethasone, dexamethasone 21-isonicotinate, diflorasone, fluocinonide, fluocinolone, fluorometholone, flurandrenolide, fluticasone, halcinonide, halobetasol, hydrocortisone, hydrocortisone acetate, hydrocortisone cypionate, hydrocortisone hemisuccinate, hydrocortisone 21-lysinate, hydrocortisone sodium succinate, isoflupredone, isoflupredone acetate, methylprednisolone, methylprednisolone acetate, methylprednisolone sodium succinate, methylprednisolone suleptanate, mometasone, prednicarbate, prednisolone, prednisolone acetate, prednisolone hemisuccinate, prednisolone sodium phosphate, prednisolone sodium succinate, prednisolone valerate-acetate, prednisone, triamcinolone, triamcinolone acetonide, pharmaceutically acceptable salts thereof, and combinations thereof.

Nonlimiting examples of NSAIDs that can be useful in the second agent include salicylic acid derivatives (such as salicylic acid, acetylsalicylic acid, methyl salicylate, diflunisal, olsalazine, salsalate and sulfasalazine), indole and indene acetic acids (such as indomethacin, etodolac and sulindac), fenamates (such as etofenamic, meclofenamic, mefenamic, flufenamic, niflumic and tolfenamic acids), heteroaryl acetic acids (such as acemetacin, alclofenac, clidanac, diclofenac, fenchlofenac, fentiazac, furofenac, ibufenac, isoxepac, ketorolac, oxipinac, tiopinac, tolmetin, zidometacin and zomepirac), aryl acetic acid and propionic acid derivatives (such as alminoprofen, benoxaprofen, bucloxic acid, carprofen, fenbufen, fenoprofen, fluprofen, flurbiprofen, ibuprofen, indoprofen, ketoprofen, miroprofen, naproxen, oxaprozin, pirprofen, pranoprofen, suprofen, tiaprofenic acid and tioxaprofen), enolic acids (such as the oxicam derivatives ampiroxicam, cinnoxicam, droxicam, lornoxicam, meloxicam, piroxicam, sudoxicam and tenoxicam, and the pyrazolone derivatives aminopyrine, antipyrine, apazone, dipyrone, oxyphenbutazone and phenylbutazone), alkanones (such as nabumetone), nimesulide, proquazone, MX-1094, licofelone, and pharmaceutically acceptable salts thereof, and combinations thereof.

Nonlimiting examples of COX-2 selective inhibitors that can be useful in the second agent include celecoxib, deracoxib, valdecoxib, parecoxib, rofecoxib, etoricoxib, lumiracoxib, PAC-10549, cimicoxib, GW-406381, LAS-34475, CS-502, pharmaceutically acceptable salts thereof, and combinations thereof.

Described herein is a combination, wherein alternatively or in addition, the second agent can illustratively comprise a disease-modifying osteoarthritis drug (DMOAD). Nonlimiting examples of DMOADs that can be useful in the second agent include methotrexate, diacerein, glucosamine, chondroitin sulfate, anakinra, MMP inhibitors, doxycycline, minocycline, misoprostol, proton pump inhibitors, non-acetylated salicylates, tamoxifen, prednisone, methylprednisolone, polysulfated glycosaminoglycan, calcitonin, alendronate, risedronate, zoledronic acid, teriparatide, VX-765, pralnacasan, SB-462795, CPA-926, ONO-4817, S-3536, PG-530742, CP-544439, pharmaceutically acceptable salts thereof, and combinations thereof.

Described herein is a combination, wherein alternatively or in addition, the second agent can illustratively comprise a disease-modifying anti-rheumatic drug (DMARD). Nonlimiting examples of DMARDs that can be useful in the second agent include etanercept, adalimumab, infliximab, IL-1 receptor antagonists, glucocorticoids such as prednisone and methylprednisolone, penicillamine, hydroxychloroquine sulfate, chlorambucil, cyclosphosphamide, leflunomide, cyclosporine, auranofin, aurothioglucose, azathioprine, gold sodium thiomalate, methotrexate, cyclophosphamide, minocycline, sulfasalazine, abatacept, rituximab, bucillamine, chloroquine, hydroxychloroquine, lobenzarit, misoprostol, pharmaceutically acceptable salts thereof, and combinations thereof.

Described herein is a combination, wherein alternatively or in addition, the second agent can illustratively comprise a symptom-modifying anti-arthritis drug, not mentioned above. Nonlimiting examples of such drugs that can be useful in the second agent include ADL-100116, AD-827, HOE-140, DA-5018, pharmaceutically acceptable salts thereof, and combinations thereof.

More than one anti-arthritis drug can be administered in combination or adjunctive therapy with lacosamide. Two or more such agents can be included in the combination or adjunctive therapy, selected from two or more of the following classes:
(i) opioid and non-opioid analgesics;
(ii) steroidal anti-inflammatories;
(iii) NSAIDs and COX-2 selective inhibitors;
(iv) DMOADS; and
(v) DMARDs.

The two or more agents administered in combination or adjunctive therapy with lacosamide, may be selected from the above listed agents wherein at least one of the agents is a DMOAD or a DMARD.

Administration of the therapeutic combination can be useful for treating both an arthritic condition and pain related thereto. Illustratively, lacosamide, may be used to treat pain, more particularly non-inflammatory pain, associated with an arthritic condition and at least one anti-arthritis drug, such as those listed above, may be used in combination with lacosamide to treat an underlying process causing or contributing to the arthritic condition, or to treat another symptom, for example inflammatory pain, of the arthritic condition.

In another embodiment, the second agent is present in an amount effective, in combination with the first agent, to provide enhanced treatment of pain, more particularly non-inflammatory pain, by comparison with the first agent alone. Any drug that, in combination with the first agent, provides such enhanced treatment, can be used as or included in the second agent, for example an opioid or non-opioid analgesic, an anticonvulsant, an antidepressant and/or an NMDA receptor antagonist.

"Enhanced treatment of pain" in the present context means that the combination is superior to the first agent alone in at least one of the following respects:
(a) greater reduction of intensity and/or duration of pain;
(b) enabling dose reduction of either the first agent or the second agent or both by comparison with a typical effective dose when used in monotherapy;
(c) reduction in adverse side effects; and/or
(d) improved therapeutic ratio.

It is not required that the first and second agent interact more than additively, but in some cases the reduction of intensity and/or duration of pain provided by the combination can be greater than would be expected based on the effectiveness of either agent alone at the same dose.

According to the present embodiment the second agent can comprise one or more analgesics, for example selected from those listed above. According to the present invention the second agent comprises morphine or a pharmaceutically acceptable salt thereof.

Described herein are combination wherein alternatively, or in addition, the second agent can comprise one or more anticonvulsants, for example selected from acetylpheneturide, albutoin, aminoglutethimide, 4-amino-3-hydroxybutyric acid, atrolactamide, beclamide, buramate, carbamazepine, cinromide, clomethiazole, clonazepam, decimemide, diethadione, dimethadione, doxenitoin, eterobarb, ethadione, ethosuximide, ethotoin, felbamate, fluoresone, fosphenytoin, gabapentin, ganaxolone, lamotrigine, levetiracetam, lorazepam, mephenytoin, mephobarbital, metharbital, methetoin, methsuximide, midazolam, narcobarbital, nitrazepam, oxcarbazepine, paramethadione, phenacemide, phenetharbital, pheneturide, phenobarbital, phensuximide, phenylmethylbarbituric acid, phenytoin, phenethylate, pregabalin, primidone, progabide, remacemide, rufinamide, suclofenide, sulthiame, talampanel, tetrantoin, tiagabine, topiramate, trimethadione, valproic acid, valpromide, vigabatrin, zonisamide, pharmaceutically acceptable salts thereof, and combinations thereof.

Described herein are combinations, wherein the second agent comprises one or more anticonvulsants selected from carbamazepine, phenytoin, gabapentin, pregabalin, lamotrigine, levetiracetam and pharmaceutically acceptable salts thereof. In an illustrative example, the second agent comprises gabapentin.

Described herein are combinations, wherein alternatively or in addition, the second agent can comprise one or more antidepressants, including without limitation bicyclic, tricyclic and tetracyclic antidepressants, hydrazides, hydrazines, phenyloxazolidinones and pyrrolidones. An antidepressant can for example be selected from adinazolam, adrafinil, amineptine, amitriptyline, amitriptylinoxide, amoxapine, befloxatone, bupropion, butacetin, butriptyline, caroxazone, citalopram, clomipramine, cotinine, demexiptiline, desipramine, dibenzepin, dimetacrine, dimethazan, dioxadrol, dothiepin, doxepin, duloxetine, etoperidone, femoxetine, fencamine, fenpentadiol, fluacizine, fluoxetine, fluvoxamine, hematoporphyrin, hypericin, imipramine, imipramine N-oxide, indalpine, indeloxazine, iprindole, iproclozide, iproniazid, isocarboxazid, levophacetoperane, lofepramine, maprotiline, medifoxamine, melitracen, metapramine, metralindole, mianserin, milnacipran, minaprine, mirtazapine, moclobemide, nefazodone, nefopam, nialamide, nomifensine, nortriptyline, noxiptilin, octamoxin, opipramol, oxaflozane, oxitriptan, oxypertine, paroxetine, phenelzine, piberaline, pizotyline, prolintane, propizepine, protriptyline, pyrisuccideanol, quinupramine, reboxetine, ritanserin, roxindole, rubidium chloride, sertraline, sulpiride, tandospirone, thiazesim, thozalinone, tianeptine, tofenacin, toloxatone, tranylcypromine, trazodone, trimipramine, tryptophan, venlafaxine, viloxazine, zimeldine, pharmaceutically acceptable salts thereof, and combinations thereof. According to the present invention, the second agent comprises duloxetine.

Described herein are combinations, wherein alternatively or in addition, the second agent can comprise one or more NMDA receptor antagonists, for example selected from amantadine, D-AP5, aptiganel, CPP, dexanabinol, dextromethorphan, dextropropoxyphene, 5,7-dichlorokynurenic acid, gavestinel, ifendopril, ketamine, ketobemidone, licostinel, LY-235959, memantine, methadone, MK-801, phencyclidine, remacemide, selfotel, tiletamine, pharmaceutically acceptable salts the and combinations thereof. According to the present invention, the second agent comprises memantine. '

Described herein are combinations, wherein the second agent comprises one or more drugs independently selected from the group consisting of GABA analogues, thiophene propane derivatives, morphine analogues and opioids, the 2-arylpropionic acid (profen) family of NSAIDs, and amantadine (1-aminoadamantane) derivatives.

An example of a GABA analogue is gabapentin. An example of a thiophene propan derivative is duloxetin. An example of opioids is morphine. A member of the 2-arylpropionic acid family of NSAIDs is naproxen. A derivative of amantadine in memantine.

In the present invention, the second agent comprises one or more drugs independently selected from the group consisting of duloxetine, morphine, and memantine.

Described herein is a combination, wherein the first agent comprises lacosamide, and the second agent comprises gabapentin.

In yet another embodiment, in the combination of the present invention, the first agent comprises lacosamide, and the second agent comprises duloxetine.

In yet another embodiment, in the combination of the present invention, the first agent comprises lacosamide, and the second agent comprises morphine.

Described herein is a combination, wherein the first agent comprises lacosamide, and the second agent comprises naxproxen.

In yet another embodiment, in the combination of the present invention, the first agent comprises lacosamide, and the second agent comprises memantine.

In one embodiment of the present invention, the combination of the present invention provides enhanced treatment of pain associated with or caused by a medical condition, wherein the medical condition is accompanied by or has, as a symptom thereof, non-inflammatory pain.

In one embodiment of the present invention, the combination of the present invention provides enhanced treatment of pain, wherein the pain related to the medical condition comprises non-inflammatory pain.

In one embodiment of the present invention, the combination of the present invention provides enhanced treatment of pain associated with or caused by a medical condition, wherein the medical condition is an arthritic condition and/or pain related thereto. The arthritic condition may comprise osteoarthritis. In this embodiment, in the combination the first agent and the second agent may be present in absolute and relative amounts effective to treat an arthritic condition and/or pain related thereto. In the combination the first agent and the second agent may be present in absolute and relative amounts effective to treat both non-inflammatory and inflammatory components of pain associated with or caused by the arthritic condition.

In the combination, the first and the second agent may be present in absolute and relative amounts effective to treat non-inflammatory pain related to an arthritic condition. The first and the second agent may be present in absolute and relative amounts effective to treat non inflammatory osteoarthritic pain.

In the combination, the first and the second agent may be present in absolute and relative amounts effective to treat inflammatory pain related to an arthritic condition. The first agent and the second agent may be present in absolute and relative amounts effective to treat inflammatory osteoarthritic pain.

Osteoarthritic pain may be associated with cartilage degradation, structural bone changes, and or vascularization of areas of osteoarthritic remodeling.

The arthritic condition may comprise one or more disorders selected from the group consisting of idiopathic osteoarthritis, secondary osteoarthritis, rheumatoid arthritis, juvenile rheumatoid arthritis, psoriatic arthritis, infectious arthritis, ankylosing spondylitis, neurogenic arthropathy, polyarthralgia, and arthritis associated with Sjögren's syndrome, Behçet's syndrome, Reiter's syndrome, systemic lupus erythematosus, rheumatic fever, gout, pseudogout, Lyme disease, sarcoidosis and ulcerative colitis.

The arthritic condition may comprise rheumatoid arthritis or juvenile rheumatoid arthritis.

In another embodiment of the present invention, the combination of the present invention provides enhanced treatment of pain associated with or caused by a medical condition, wherein the medical condition is pain in painful diabetic neuropathy. The painful diabetic neuropathy may be diabetic distal sensory polyneuropathy. In the combination, the first and the second agent may be effective for treatment of an aspect of pain selected from the group consisting of average daily pain, overall pain, present pain intensity, pain interference with sleep, the subjects' perception of pain interference with general activity, the patients' global impression of change in pain, clinical global impression of change in pain, the subject's perception of different neuropathic pain qualities, quality of life and proportion of pain-free days.

In the present invention, the painful diabetic neuropathy may be associated with Diabetes mellitus Type I or Type II. The painful diabetic neuropathy may also be associated with Diabetes mellitus Type II.

In another embodiment of the present invention, the combination of the present invention provides enhanced treatment of pain associated with or caused by a medical condition, wherein the medical condition or pain related thereto is selected from the group consisting of acute inflammatory pain; acute pain; alcoholism-associated or alcoholism-induced neuropathic pain; allodynia; arthritic conditions; back pain; cancer-related neuropathic pain; central neuropathic pain; chronic headache; chronic inflammatory pain; chronic pain; chronic pain due to peripheral nerve injury; diabetes-associated or diabetes-induced neuropathic pain; diabetic distal sensory neuropathy; diabetic distal sensory polyneuropathy; diabetic pain; fibromyalgia; headache; hyperalgesia; hyperesthesia; hyperpathia; migraine; myalgia; myofascial pain syndrome; neuralgia; neuroma; non-inflammatory osteoarthritic pain; non-neuropathic inflammatory pain; neuropathic pain; pain associated with or induced by chemotherapy or radiation therapy; pain associated with or induced by traumatic nerve injury or compression or by traumatic injury to the brain or spinal cord; painful diabetic neuropathy; peripheral neuropathic pain; persistent clinical pain; phantom pain; rheumatoid arthritis pain; secondary inflammatory osteoarthritic pain; trigeminal neuralgia; vascular headache; and combinations thereof.

The second agent may be present in an amount effective, in combination with the first agent, to provide enhanced treatment of pain by comparison with the first agent alone.

Described herein is a method for treating a painful medical condition and/or pain related thereto in a subject, the method comprising administering to the subject the therapeutic combination of the present invention. In the method of the present invention, the painful medical condition or/and pain related thereto is selected from the conditions as described herein.

In the method described herein, the medical condition or pain related thereto is selected from the group consisting of acute inflammatory pain; acute pain; alcoholism-associated or alcoholism-induced neuropathic pain; allodynia; arthritic conditions; back pain; cancer-related neuropathic pain; central neuropathic pain; chronic headache; chronic inflammatory pain; chronic pain; chronic pain due to peripheral nerve injury; diabetes-associated or diabetes-induced neuropathic pain; diabetic distal sensory neuropathy; diabetic distal sensory polyneuropathy; diabetic pain; fibromyalgia; headache; hyperalgesia; hyperesthesia; hyperpathia; migraine; myalgia; myofascial pain syndrome; neuralgia; neuroma; non-inflammatory osteoarthritic pain; non neuropathic inflammatory pain; neuropathic pain; pain associated with or induced by chemotherapy or radiation therapy; pain associated with or induced by traumatic nerve injury or compression or by traumatic injury to the brain or spinal cord; painful diabetic neuropathy; peripheral neuropathic pain; persistent clinical pain; phantom pain; rheumatoid arthritis pain; secondary inflammatory osteoarthritic pain; trigeminal neuralgia; vascular headache; and combinations thereof.

The method described herein employs in said combination a first agent comprising lacosamide.

Yet another aspect of the present invention is the use of a combination as defined herein for the preparation of a medicament for the enhanced prevention, alleviation or/and treatment of pain associated with or caused by a medical condition, by comparison with lacosamide alone; said second agent comprising one or more drugs independently selected from the group consisting of duloxetine, morphine and memantine.

In one embodiment of the use of the present invention, the painful medical condition or/and pain related thereto is selected from the conditions as described herein.

Suitable regimens including doses and routes of administration for particular drugs useful in or as the second agent can be determined from readily-available reference sources relating to these drugs, for example Physicians Desk Reference (PDR), 60th edition, Montvale, NJ: Thomson (2006) and various internet sources known to those of skill in the art. When administered in combination or adjunctive therapy with lacosamide, a drug useful in or as the second agent can be used at a full dose, but the physician may elect to administer less than a full dose of such a drug, at least initially.

The first agent and second agent can be provided in one pharmaceutical preparation (single dosage form) for administration to the subject at the same time, or in two or more distinct preparations (separate dosage forms) for administration to the subject at the same or different times, e.g., sequentially, and/or at the same or different frequencies. The two distinct preparations can be provided in forms adapted for administration by the same route or by different routes.

Separate dosage forms can optionally be co-packaged, for example in a single container or in a plurality of containers within a single outer packages or co-presented in separate packaging ("common presentation"). As an example of co-packaging or common presentation, a kit is contemplated comprising, in a first container, lacosamide, and, in a second container, a second agent as described herein. In another example, lacosamide, and a second agent are separately packaged and available for sale independently of one another, but are co-marketed or co-promoted for use according to the invention. The separate dosage forms may also be presented to a subject separately and independently, for use according to the invention.

Depending on the dosage forms, which may be identical or different, e.g., fast release dosage forms, controlled release dosage forms or depot forms, lacosamide, and the second agent may be administered on the same or on different schedules, for example on a daily, weekly or monthly basis.

In one embodiment, administration of the therapeutic combination is useful for treating non-inflammatory osteoarthritic pain. In particular, such administration is useful when non-inflammatory osteoarthritic pain is associated with cartilage degradation, structural bone changes, and/or vascularization of areas of bone remodeling. Bone continually undergoes remodeling. Remodeling is a process in which old bone is replaced with new bone to maintain peak bone density. Vascularization occurs by the proliferation of capillaries during the remodeling process and can be increased in conditions such as osteoarthritis.

In one embodiment, administration of the therapeutic combination inhibits transmission of pain. Inhibition of transmission of pain, typically a contributory effect of lacosamide, may be accomplished by preventing spinal neurons from responding to neurotransmitters, such as glutamate, released by nociceptors.

### EXAMPLES

### Example 1

This example describes a study demonstrating antinociceptive effectiveness of lacosamide in inhibiting mechanical hyperalgesia, as measured by paw withdrawal threshold to muscle pressure, and mechanical allodynia, as measured by biceps muscle grip strength, occurring in musculoskeletal pain induced by TNF in rats. The model used in this example is applicable to musculoskeletal pain which occurs in fibromyalgia, myofascial pain syndrome, back pain or osteoarthritis. For comparative purposes, the non-opioid analgesic dipyrone (metamizol) and the anticonvulsants pregabalin and gabapentin were included in the study.

### Animals, induction of muscle pain

Adult male Sprague Dawley rats with a body weight of 250 g to 300 g were used (supplier: Charles River, Sulzfeld, Germany). Animals were group-hòused (3 animals per cage) and maintained in a room with controlled temperature (21-22°C) and a reversed light-dark cycle (12 h/12 h) with food and water available *ad libitum.* All experiments were approved by the Bavarian State animal experimentation committee and carried out in accordance with its regulations.

Recombinant rat tumor necrosis factor alpha (herein referred to as TNF) was obtained from R&D Systems, Minneapolis, MN, U.S.A. TNF was diluted in 0.9% NaCl and used in a concentration of 1 µg in 50 µl. Injections were performed in short halothane narcosis with a 30 g needle bilaterally into the gastrocnemius or into the biceps brachii muscle. All rats were used to the behavioral tests before injections and baseline values were recorded over three test days.

### Behavioral readout: muscle pressure (Randall-Selitto)

Mechanical withdrawal thresholds to muscle pressure were measured with an analgesimeter (Ugo Basile, Comerio, Italy). The rat was allowed to crawl into a sock which helps the rat to relax. The hind limbs were positioned such that an increasing pressure could be applied onto the gastrocnemius muscle (maximum 250 g). The pressure needed to elicit withdrawal was recorded. Means of 3 trials for each hind limb were calculated (interstimulus interval of >30 sec). Only animals with a significant TNF effect were included for further analysis.

Rats were injected with TNF into the gastrocnemius muscle at 2 pm. Eighteen hours later, rats were tested for pressure hyperalgesia pre- and post- administration of the test drug. Rats were tested for pressure hyperalgesia 30 to 60 minutes after drug administration.

### Behavioral readout: grip strength

Grip strength of the forelimbs was tested with a digital grip force meter (DFIS series, Chatillon, Greensboro, NC, U.S.A.). The rat was positioned to grab the grid with the forelimbs and was gently pulled so that the grip strength could be recorded. Means of three trials were calculated. The effect of the TNF treatment was calculated for each animal separately and only animals with a significant TNF effect were included for further analysis.

Rats were injected with TNF into the biceps brachii muscle at 8 am. Six hours later, grip strength of the forelimbs was tested with a digital grip force meter. Test drug was administered, and grip strength was again tested after 30 to 60 minutes.

### Administration protocol

The rats, initially 10 per group, were treated with either 3, 10 or 30 mg/kg lacosamide, 2 mg/kg metamizol, 30 or 100 mg/kg pregabalin, 100 mg/kg gabapentin, or the NaCl vehicle, i.p. (intraperitoneally). Volume of i.p. injections was 0.5 ml. A pilot study was performed to confirm that i.m. (intramuscular) injection of 1 µg TNF into the gastrocnemius muscle was sufficient to induce pressure hyperalgesia.

Groups and treatments are summarized for gastrocnemius muscle and biceps brachii muscle injections of TNF respectively in stables 1 and 2.

**Table 1: Gastrocnemius muscle injection of TNF**

| **Group no.** | **Induction treatment** | **Drug and dose** | **No. of rats** |
|---|---|---|---|
| 1.1 | TNF 1 µg i.m. | lacosamide 3 mg/kg i.p. | 8 |
| 1.2 | TNF 1 µg i.m. | lacosamide 10 mg/kg i.p. | 8 |
| 1.3 | TNF 1 µg i.m. | lacosamide 30 mg/kg i.p. | 7 |
| 1.4 | TNF 1 µg i.m. | pregabalin 30 mg/kg i.p. | 8 |
| 1.5 | TNF 1 µg i.m. | pregabalin 100 mg/kg i.p. | 10 |
| 1.6 | TNF 1 µg i.m. | gabapentin 100 mg/kg i.p. | 10 |
| 1.7 | TNF 1 µg i.m. | NaCl vehicle i.p. | 10 |
| 1.8 | TNF 1 µg i.m. | metamizol 2 mg/kg i.p. | 9 |

**Table 2: Biceps brachii injection of TNF**

| **Group no.** | **Induction treatment** | **Drug and dose** | **No. of rats** |
|---|---|---|---|
| 12.1 | TNF 1 µg i.m. | lacosamide 3 mg/kg i.p. | 4 |
| 2.2 | TNF 1 µg i.m. | lacosamide 10 mg/kg i.p. | 9 |
| 2.3 | TNF 1 µg i.m. | lacosamide 30 mg/kg i.p. | 10 |
| 2.4 | TNF 1 µg i.m. | pregabalin 30 mg/kg i.p. | 10 |
| 2.5 | TNF 1 µg i.m. | pregabalin 100 mg/kg i.p. | 10 |
| 2.6 | TNF 1 µg i.m. | Gabapentin 100 mg/kg i.p. | 10 |
| 2.7 | TNF 1 µg i.m. | NaCl vehicle i.p. | 10 |
| 2.8 | TNF 1 µg i.m. | metamizol 2 mg/kg i.p. | 7 |

### Data presentation and statistics

Data are shown in graphs displaying means and standard errors of the means (SEM). Pre- and post-treatment data were compared using ANOVA (analysis of variance) and a Tukey *post hoc* test. Means of treatment groups were compared using a one-way ANOVA and Dunnett's *post hoc* test. Maximal possible effects (MPE) were calculated for all types of treatment.

### Results: muscle pressure hyperalgesia

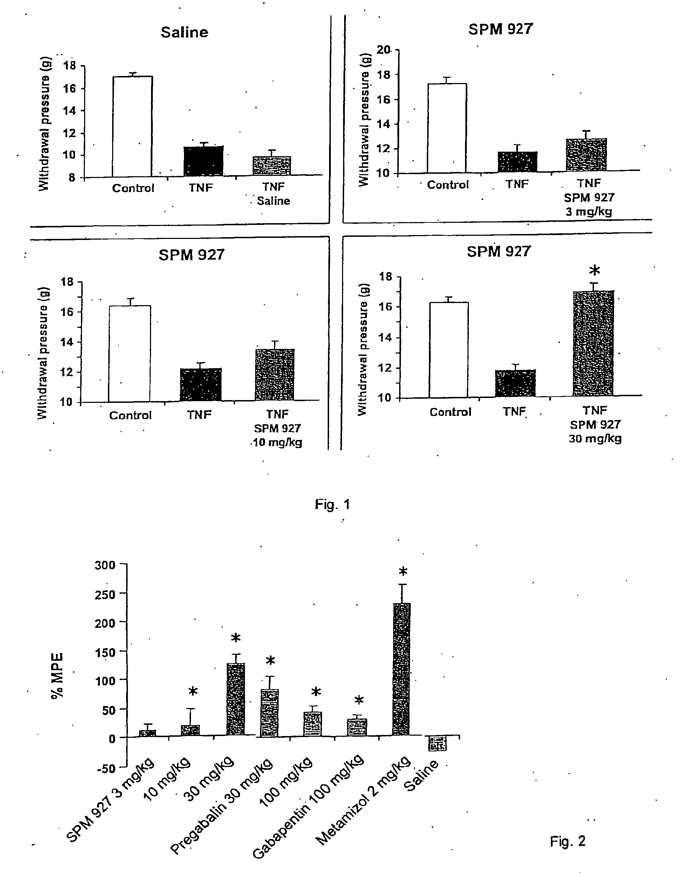

Only rats in which withdrawal thresholds were significantly reduced after TNF injection were included. In about 13% of the rats, the TNF effect was absent. Fig. 1 shows absolute values of withdrawal thresholds to pressure.

A complete reversal of muscular mechanical hyperalgesia was seen with lacosamide at 30 mg/kg and metamizol at 2 mg/kg.

A significant reversal of muscular mechanical hyperalgesia was also seen for pregabalin at 30 and 100 mg/kg, and gabapentin at 100 mg/kg.

The MPE (Fig. 2) was significantly different from vehicle for lacosamide at 10 and 30 mg/kg, for pregabalin at 30 and 100 mg/kg, for gabapentin at 100 mg/kg, and for metamizol at 2 mg/kg. The vehicle had no effect.

### Results: biceps muscle grip strength

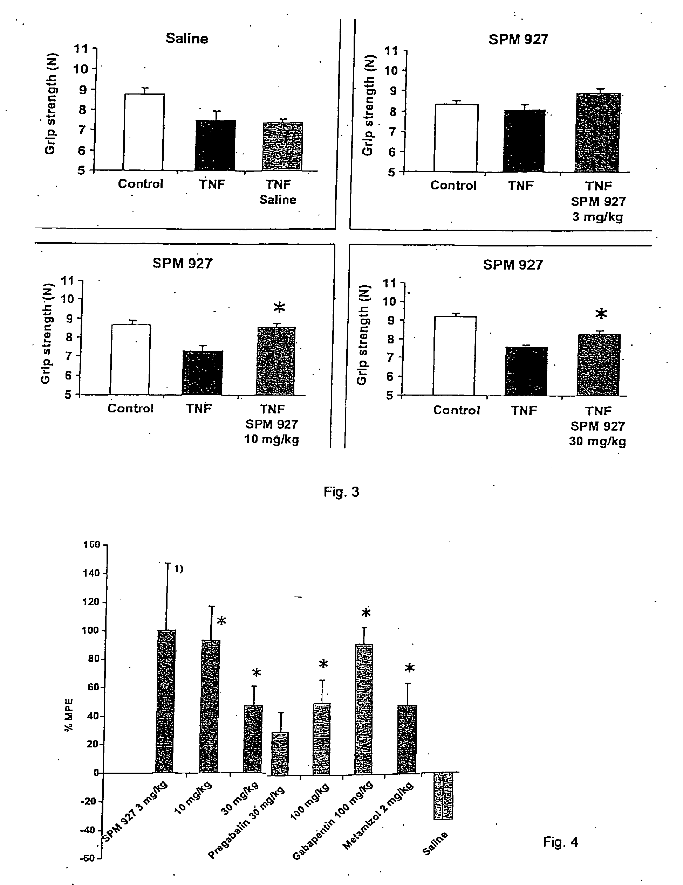

Only rats in which grip strength was significantly reduced after TNF injection were included. In about 13% of the rats, the TNF effect was absent. Fig. 3 shows absolute values of grip strength.

A significant reversal of TNF-induced reduction of grip strength was seen with lacosamide at 10 and 30 mg/kg. A significant reversal was also seen for pregabalin at 100 mg/kg, gabapentin at 100 mg/kg and metamizol at 2 mg/kg.

The MPE (Fig. 4) was significantly different from vehicle for lacosamide at 10 and 30 mg/kg, for pregabalin at 100 mg/kg, for gabapentin at 100 mg/kg, and for metamizol at 2 mg/kg. The vehicle had no effect.

### Discussion

Lacosamide dose-dependently improved muscle hyperalgesia induced by TNF injection in the paw pressure test, reaching full reversal at 30 mg/kg. In comparison to the anticonvulsants pregabalin and gabapentin, lacosamide had a stronger effect on muscle pain. Neither pregabalin nor gabapentin led to a full reversal of the muscle hyperalgesia. In the grip strength test indicative of mechanical allodynia, lacosamide reversed the effect of TNF on the muscle at 10 mg/kg. Again lacosamide was more potent than pregabalin and gabapentin, which improved grip strength at 100 mg/kg.

In conclusion, lacosamide was effective in reducing the muscular hyperalgesia and mechanical allodynia induced by TNF injected into muscle. Thus lacosamide, illustratively of compounds of Formulas (I), (II) and (III), is concluded to have therapeutic efficacy in the treatment, in particular systemic treatment, of specific manifestations of non-inflammatory musculoskeletal pain, such as muscular hyperalgesia and allodynia, occurring for example in fibromyalgia, myofascial pain syndrome, back pain or osteoarthritis.

### Example 2

This example describes a study demonstrating antinociceptive effectiveness of lacosamide in an iodoacetate rat model. The model used in this example is applicable to non-inflammatory osteoarthritic pain. For comparative purposes, the opioid analgesic morphine and the NSAID diclofenac was included in the study.

One of the best characterized rat models for osteoarthritis is injection of the metabolic inhibitor monosodium iodoacetate into a joint, for example a knee joint, which inhibits activity of glyceraldehyde-3-phosphate dehydrogenase in chondrocytes, resulting in disruption of glycolysis and eventually in cell death (Guzman et al. (2003) Toxicol. Pathol. 31(6):619-624; Kalbhen (1987) J. Rheumatol. 14(Spec. No.):130-131). The progressive loss of chondrocytes results in histological and morphological changes of the articular cartilage, closely resembling those seen in human osteoarthritis patients.

### Animals

Male Wistar rats (Janview, France) weighing 170-200 g at the start of the study were used. The animals were group-housed (3 animals per cage) in a room with controlled temperature (21-22°C), and a reversed light-dark cycle (12 h/12 h), and had free access to food and water.

### Induction of osteoarthritis

Osteoarthritis was induced by intra-articular injection in 50 µl of 3 mg monosodium iodoacetate (MIA) (Sigma) through the intrapatellar ligament of the right knee. Control rats were injected with an equivalent volume of saline. Up to five days after the iodoacetate injection a substantial inflammation of synovial joints was observed in this model. The general health of the animals was monitored. No signs of distress were seen.

### Histology

On each of days 3, 7 and 14 after iodoacetate treatment, four animals were sacrificed for histology study. Knees were harvested and fixed overnight in 10% formalin and subsequently decalcified with 10% formic acid for 72 h before being embedded in paraffin. Sections 10 µm thick were prepared every 250 µm. Hematoxylin/eosin staining was carried out to assess the extent of inflammatory infiltrates in the joints and surrounding tissues, and Saflanin-O fast green staining was done to measure the degeneration of cartilage.

### Evaluation of the effect of compounds on nociception

In the first round of experiments the iodoacetate-treated rats were randomized to six experimental groups (12 animals per group) which received the following treatments (p.o. = *per os;* s.c. = subcutaneous) on the days of pain assessment (days 3, 7 and 14 post-iodoacetate treatment):
p.o. injection of saline (vehicle);
p.o. injection of 3 mg/kg lacosamide;
p.o. injection of 10 mg/kg lacosamide;
p.o. injection of 30 mg/kg lacosamide;
s.c. injection of 3 mg/kg morphine.

Diclofenac (30 mg/kg, s.c.) was tested in a separate experiment by the same scientists under the same conditions at about the same time. The non-iodoacetate treated control group (control) received p.o. injection of saline 45 minutes prior to the pain assessment. Lacosamide, diclofenac and morphine were injected 60 minutes prior to implementation of behavioral tests. Each group was examined blind.

### Evaluation of tactile allodynia and mechanical hyperalgesia

For testing tactile allodynia, rats were placed on a metallic grid floor. Nociceptive testing was done by inserting a von Frey filament (Bioseb, France) through the grid floor and applying it to the plantar surface of the hind paw. A trial consisted of several applications of different von Frey filaments (at a frequency of about 1 Hz). The von Frey filaments were applied from filament 10 g to 100 g. As soon as the animal removed its hind paw, the test was stopped and the filament number was recorded to represent the paw withdrawal threshold.

For testing mechanical hyperalgesia, nociceptive flexion reflexes were quantified using the Randall-Selitto paw pressure device (Bioseb, France), which applied a linearly increasing mechanical force to the dorsum of the rat's hind paw. The paw withdrawal threshold was defined as the force at which the rat withdrew its paw. The cutoff pressure was set to 250 g.

### Drugs and reagents

Lacosamide (Schwarz BioSciences GmbH) and morphine sulfate (Francopia, France) were dissolved in saline. Monosodium iodoacetate and diclofenac were purchased from Sigma (France). Drug administration was made in a volume of 1 ml/kg.

### Data analyses and statistics

Comparisons of groups of behavioral data at each individual time point were conducted using ANOVA followed by post-hoc analysis (Dunnett's test).

### Results

Joint pathology was assessed on day 3, 7 and 14 following intra-articular injection of iodoacetate. At day 3 there was a substantial initial inflammatory response. This inflammation was characterized by an expansion of the synovial membrane most likely caused by proteinaceous edema fluid and fibrin with infiltrating macrophages, neutrophils, plasma cells and lymphocytes. The cartilage was still intact. By day 7, inflammation within the synovium and surrounding tissue has largely resolved. On day 14 proteoglycan loss was seen throughout the depth of the cartilage. The synovial membrane looked normal and contained no inflammatory cells.

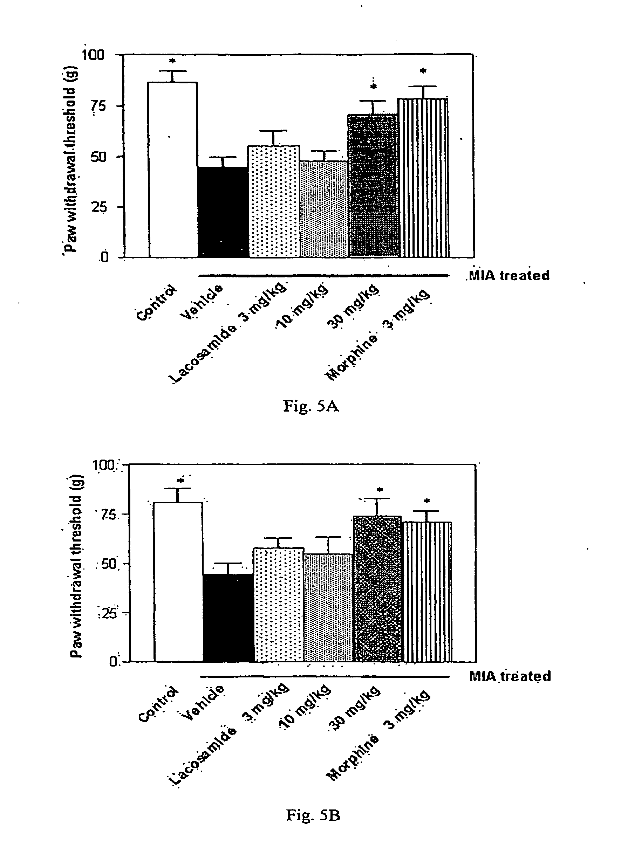

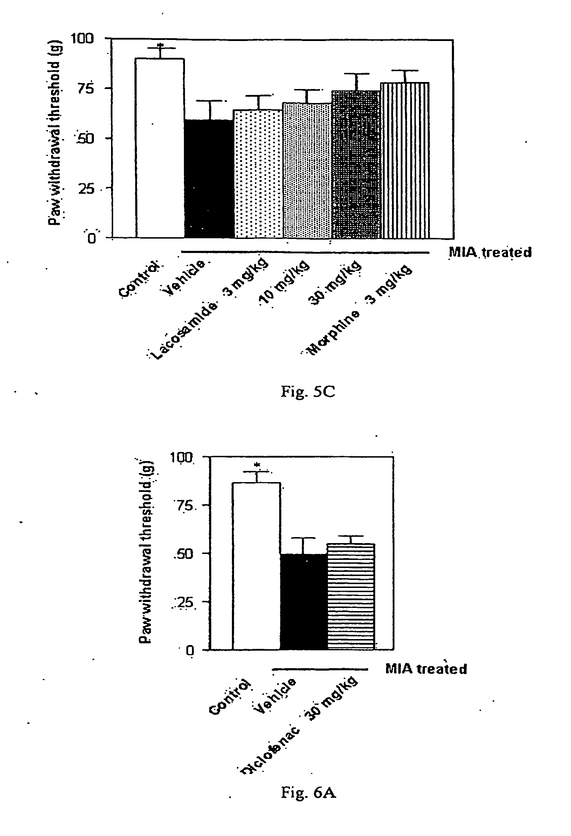

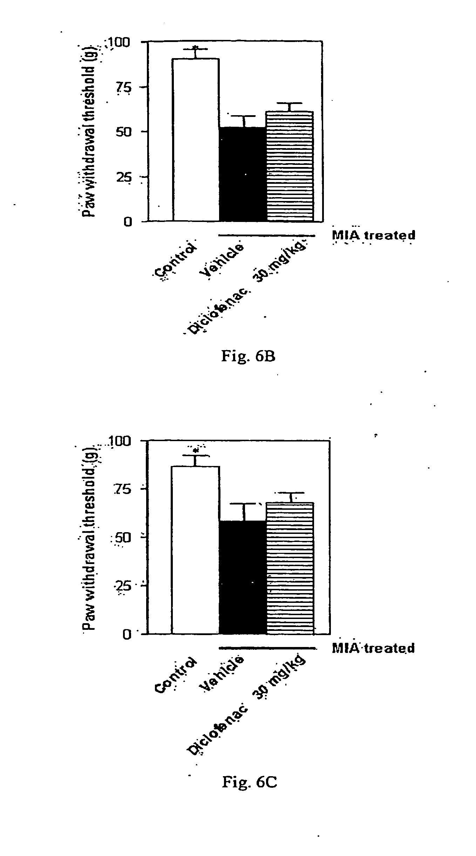

Tactile allodynia, tested with von Frey filaments, was assessed at day 3, 7, and 14 in iodoacetate-treated rats compared to control rats. Treatment with lacosamide (30 mg/kg) and morphine (3 mg/kg) improved tactile allodynia of iodoacetate-treated rats at day 3 (Fig. 5A) and 7 (Fig. 5B) but not on day 14 (Fig. 5C), and lower doses of lacosamide showed a trend for such improvement. Diclofenac (30 mg/kg) had no effect on tactile allodynia at day 3 (Fig. 6A), day 7 (Fig. 6B) or day 14 (Fig. 6C).

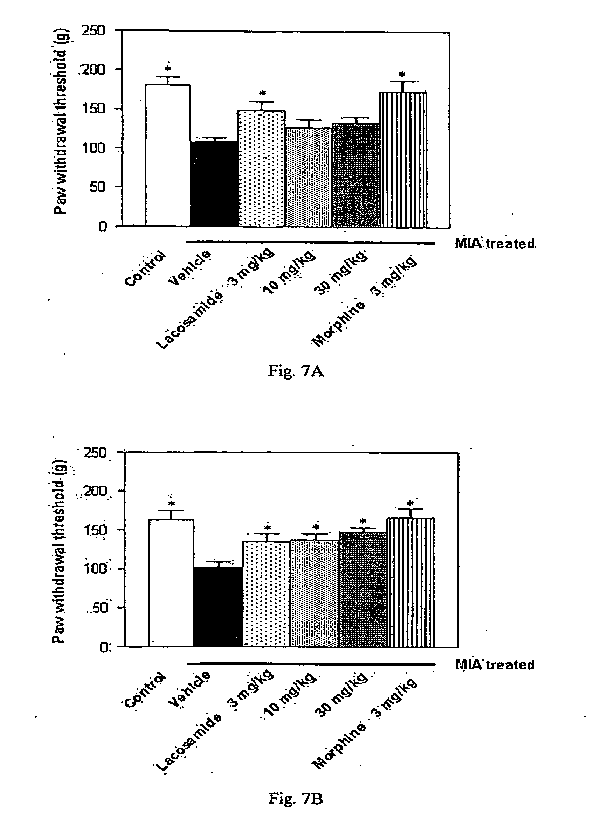

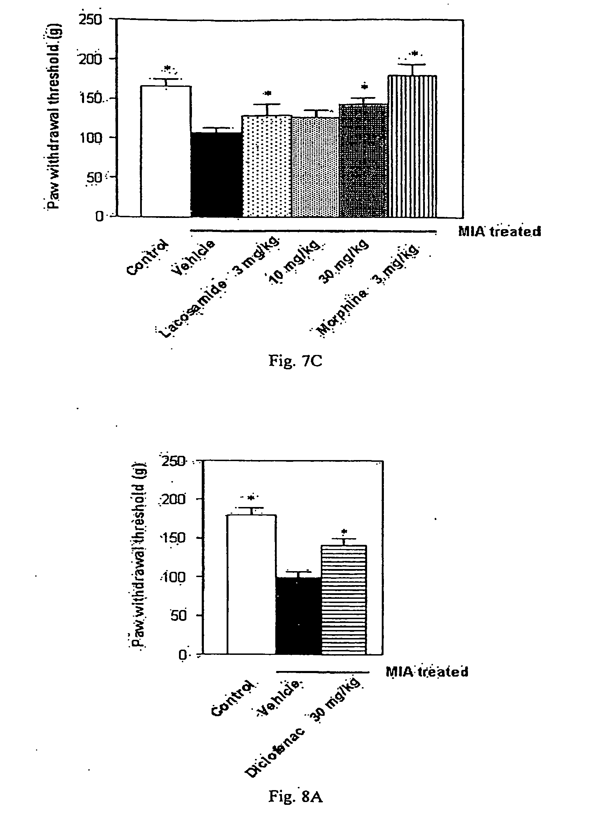

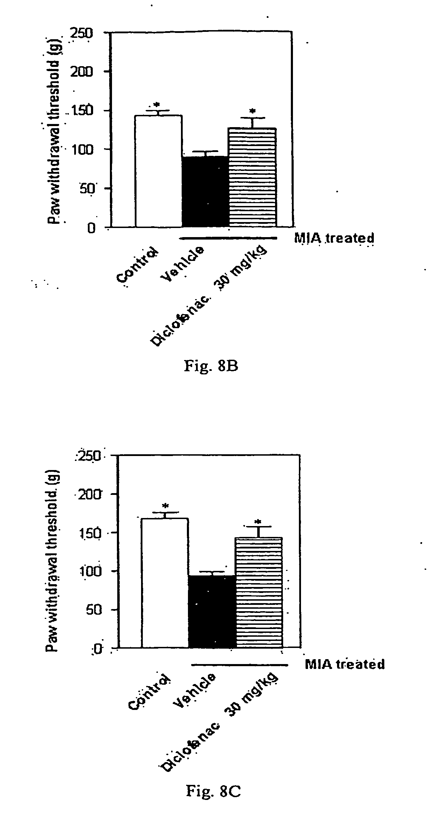

There was a marked mechanical hyperalgesia as evidenced by a reduction in the paw pressure withdrawal thresholds in the iodoacetate/vehide treated animals compared to control/vehicle treated animals. Treatment of iodoacetate-treated rats with lacosamide 3 mg/kg, morphine 3 mg/kg and diclofenac 30 mg/kg induced in each case an increase in paw pressure withdrawal threshold compared to iodoacetate/vehicle treated animals on day 3 (Figs. 7A, 8A). On day 7, lacosamide at all doses tested (3, 10 and 30 mg/kg), morphine and diclofenac each reduced mechanical hyperalgesia (Figs: 7B, 8B). Similar results were seen at day 14 after iodoacetate treatment except that the group treated with 10 mg/kg lacosamide did not show a statistically significant effect (Figs. 7C, 8C). Interestingly, in the iodoacetate-treated animals, mechanical hyperalgesia developed from day 3 and lasted for at least 14 days, compared to tactile allodynia which was more pronounced during the early phase of arthritis, development, reflecting an ongoing development of pain sensitization based on different molecular mechanisms during the 14 days post iodoacetate-treatment.

The results show that lacosamide inhibited mechanical hyperalgesia during the post-inflammatory period, indicating effectiveness of lacosamide for treating non-inflammatory osteoarthritic pain.

### Example 3

This example describes a study demonstrating effectiveness of lacosamide alone and in combination with gabapentin in the rat formalin paw test (late phase), as described by Wheeler-Aceto & Cowan (1991) Psychopharmacology 104:35-44, which detects analgesic activity.

### Materials and methods

Rats were given an intraplantar injection of 5% formalin (50 µl) into the posterior left paw. This treatment induces a recognizable flinching and licking response of the affected paw in control animals. The number of flinches was counted for 15 minutes, beginning 20 minutes after injection of formalin. The time spent licking the affected paw was also recorded.

Male Rj: Wistar (Han) rats, 10 per group, weighing 100-130 g at the beginning of the experiments were studied per group. The test was performed blind.

Lacosamide (20 mg/kg), gabapentin (50 and 100 mg/kg), combinations of lacosamide (20 mg/kg) with gabapentin (50 and 100 mg/kg), and vehicle were administered i.p. 10 minutes before injection of formalin.

### Results

Results of the test are presented in Tables 3 (number of flinches) and 4 (licking time).

**Table 3. Effect of lacosamide, gabapentin and combinations on number of flinches**

| **Compound 1 (mg/kg)** | **Compound 2 (mg/kg)** | **No. of flinches** | | | | | |
|---|---|---|---|---|---|---|---|
| | | **mean ± SEM** | | | **p value** | **% change** | |
| Vehicle | Vehicle | 127.8 ± 21.2 | | | - | - | |
| Lacosamide (20) | Vehicle | 85.7 ± 14.3 | NS | (a) | 0.1736 | -33% | (a) |
| Vehicle | Gabapentin (50) | 97.4 ± 23.8 | NS | (a) | 0.3445 | -24% | (a) |
| Vehicle | Gabapentin (100) | 88.1 ± 19.4 | NS | (a) | 0.2121 | -31% | (a) |
| Lacosamide (20) | Gabapentin (50) # | | ** | (a) | 0.0071 | -64% | (a) |
| | | 46.0 ± 21.1 | * | (b) | 0.0222 | -46% | (b) |
| | | | NS | (c) | 0.0790 | -53% | (c) |
| Lacosamide (20) | Gabapentin (100) | | ** | (a) | 0.0017 | -76% | (a) |
| | | 31.0 ± 9.3 | ** | (b) | 0.0041 | -64% | (b) |
| | | | * | (c) | 0.0343 | -65% | (c) |

**Table 4. Effect of lacosamide, gabapentin and combinations on licking time**

| **Compound 1 (mg/kg)** | **Compound 2 (mg/kg)** | **Licking time (seconds)** | | | | | |
|---|---|---|---|---|---|---|---|
| | | **mean ± SEM** | | | **p value** | **% change** | |
| Vehicle | Vehicle | 222.4 ± 33.8 | | | - | - | |
| Lacosamide (20) | Vehicle | 146.9 ± 23.8 | NS | (a) | 0.0962 | -34% | (a) |
| Vehicle | Gabapentin (50) | 161.0 ± 27.3 | NS | (a) | 0.2258 | -28% | (a) |
| Vehicle | Gabapentin (100) | 90.0 ± 22.5 | * | (a) | 0.0101 | -60% | (a) |
| Lacosamide (20) | Gabapentin (50) # | | ** | (a) | 0.0042 | -74% | (a) |
| | | 58.6 ± 32.0 | * | (b) | 0.0220 | -60% | (b) |
| | | | * | (c) | 0.0365 | -64% | (c) |
| Lacosamide (20) | Gabapentin (100) | | *** | (a) | 0.0007 | -82% | (a) |
| | | 39.1 ± 19.9 | ** | (b) | 0.0022 | -73% | (b) |
| | | | NS | (c) | 0.0685 | -57% | (c) |

| | | | | | | | |
|---|---|---|---|---|---|---|---|
| NS = not significant; * = p < 0.05; ** = p < 0.01; *** = p < 0.001 (a): compared with vehicle control (b): compared with lacosamide alone at the appropriate dose (c): compared with gabapentin alone at the appropriate dose #: missing value (1/10) | | | | | | | |

Lacosamide alone at 20 mg/kg tended to decrease the number of flinches by 33% as compared with vehicle controls. It also tended to decrease the time spent licking, by 34% as compared with vehicle controls (p = 0.0962).

Gabapentin alone at 50 and 100 mg/kg globally but non-significantly decreased the number of flinches, by 24% and 31% respectively as compared with vehicle controls. Gabapentin dose-dependently decreased the time spent licking, by 28% (50 mg/kg) and 60% (100 mg/kg), significantly so at 100 mg/kg (p < 0.05).

Lacosamide 20 mg/kg combined with gabapentin 50 and 100 mg/kg clearly and dose-dependently decreased the number of flinches, by 64% and 76% respectively (p < 0.01) as compared with vehicle controls. The combination clearly and dose-dependently decreased the time spent licking, by 74% (p < 0.01) and 82% (p < 0.001) respectively. The effects of lacosamide combined with gabapentin on the number of flinches and the time spent licking were significantly more marked than the effects of lacosamide alone (p < 0.05 or p < 0.01).

### Example 4

This example describes a study demonstrating effectiveness of lacosamide alone and in combination with morphine in the rat formalin paw test (late phase), as described by Wheeler-Aceto & Cowan (1991), *supra.*

### Materials and methods

Test methods were similar to those of Example 3. Lacosamide (10 and 20 mg/kg), morphine (2 and 4 mg/kg), combinations of lacosamide (10 and 20 mg/kg) with morphine (2 and 4 mg/kg), and vehicle were administered i.p. 10 minutes before injection of formalin.

### Results

Results of the test are presented in Tables 5 (number of flinches) and 6 (licking time).

**Table 5. Effect of lacosamide, morphine and combinations on number of flinches**

| **Compound 1 (mg/kg)** | **Compound 2 (mg/kg)** | **No. of flinches** | | | | | |
|---|---|---|---|---|---|---|---|
| | | **mean ± SEM** | | | **p value** | **% change** | |
| Vehicle | Vehicle | 150.0 ± 21.0 | | | - | - | |
| Lacosamide (10) | Vehicle | 182.7 ± 25.9 | NS | (a) | 0.3254 | +22% | (a) |
| Lacosamide (20) | Vehicle | 97.2 ± 16.0 | NS | (a) | 0.0961 | -35% | (a) |
| Vehicle | Morphine (2) | 139.5 ± 25.3 | NS | (a) | 0.6499 | -7% | (a) |
| Vehicle | Morphine (4) | 94.3 ± 21.1 | NS | (a) | 0.1303 | -37% | (a) |
| Lacosamide (10) | Morphine (2) | | NS | (a) | 0.7621 | -7% | (a) |
| | | 139.7 ± 29.4 | NS | (b) | 0.3638 | -24% | (b) |
| | | | NS | (c) | 0.8205 | 0% | (c) |
| Lacosamide (10) | Morphine (4) | | *** | (a) | 0.0002 | -86% | (a) |
| | | 20.6 ± 7.9 | *** | (b) | 0.0003 | -89% | (b) |
| | | | ** | (c) | 0.0035 | -78% | (c) |
| Lacosamide (20) | Morphine (2) | | ** | (a) | 0.0015 | -70% | (a) |
| | | 44.7 ± 12.3 | * | (b) | 0.0342 | -54% | (b) |
| | | | ** | (c) | 0.0091 | -68% | (c) |
| Lacosamide (20) | Morphine (4) | | *** | (a) | 0.0005 | -87% | (a) |
| | | 19.6 ± 13.3 | ** | (b) | 0.0014 | -80% | (b) |
| | | | ** | (c) | 0.0024 | -79% | (c) |

**Table 6. Effect of lacosamide, morphine and combinations on licking time**

| **Compound 1 (mg/kg)** | **Compound 2 (mg/kg)** | **Licking time (seconds)** | | | | | |
|---|---|---|---|---|---|---|---|
| | | **mean ± SEM** | | | **p value** | **% change** | |
| Vehicle | Vehicle | 291.9 ± 25.6 | | | - | - | |
| Lacosamide (10) | Vehicle | 210.1 ± 22.7 | * | (a) | 0.0191 | -28% | (a) |
| Lacosamide (20) | Vehicle | 128.2 ± 28.0 | *** | (a) | 0.0009 | -56% | (a) |
| Vehicle | Morphine (2) | 289.3 ± 30.7 | NS | (a) | 0.7054 | -1 % | (a) |
| Vehicle | Morphine (4) | 234.9 ± 37.3 | NS | (a) | 0.4055 | -20% | (a) |
| Lacosamide (10) | Morphine (2) | | NS | (a) | 0.1304 | -27% | (a) |
| | | 212.1 ± 27.2 | NS | (b) | 0.7624 | +1% | (b) |
| | | | * | (c) | 0.0284 | -27% | (c) |
| Lacosamide (10) | Morphine (4) | | ** | (a) | 0.0051 | -48% | (a) |
| | | 150.9 ± 36.3 | NS | (b) | 0.2265 | -28% | (b) |
| | | | NS | (c) | 0.1306 | -36% | (c) |
| Lacosamide (20) | Morphine (2) | | *** | (a) | 0.0004 | -69% | (a) |
| | | 91.5 ± 25.7 | NS | (b) | 0.2258 | -29% | (b) |
| | | | *** | (c) | 0.0009 | -68% | (c) |
| Lacosamide (20) | Morphine (4) | | *** | (a) | 0.0001 | -94% | (a) |
| | | 17.1 ± 16.4 | ** | (b) | 0.0018 | -87% | (b) |
| | | | *** | (c) | 0.0003 | -93% | (c) |

| | | | | | | | |
|---|---|---|---|---|---|---|---|
| NS = not significant; * = p < 0.05; ** = p < 0.01; *** = p < 0.001 (a): compared with vehicle control (b): compared with lacosamide alone at the appropriate dose (c): compared with morphine alone at the appropriate dose | | | | | | | |

Lacosamide alone at 10 and 20 mg/kg did not strongly affect the number of flinches, as compared with vehicle controls (22% increase and 35% decrease, respectively) although the tendency towards a decrease at 20 mg/kg approached statistical significance (p = 0.0961). Lacosamide dose-dependently decreased the time spent licking by 28% (p < 0.05) at 10 mg/kg and by 56% (p < 0.001) at 20 mg/kg.

Morphine alone at 2 and 4 mg/kg dose-dependently decreased the number of flinches and the time spent licking, as compared with vehicle controls. Nevertheless, these effects did not reach statistical significance.

Lacosamide 10 mg/kg combined with morphine 4 mg/kg, but not with morphine 2 mg/kg, clearly decreased the number of flinches by 86% (p < 0.001) and the time spent licking by 48% (p < 0.01), as compared with vehicle controls. The effects of lacosamide 10 mg/kg combined with morphine 4 mg/kg on the number of flinches, but not on the time spent licking, were more marked than the effects of lacosamide alone at the same dose (p < 0.001).

Lacosamide 20 mg/kg combined with morphine 2 and 4 mg/kg clearly and dose-dependently decreased the number of flinches by 70% (p < 0.01) and 87% (p < 0.001) respectively, as compared with vehicle controls. The combination clearly and dose-dependently decreased the time spent licking by 69% and 94%, respectively (p < 0.001). The effects of lacosamide 20 mg/kg combined with morphine on the number of flinches and the time spent licking were significantly more marked than the effects of lacosamide alone at the same dose (p < 0.05 or p < 0.01), except for the time spent licking at the 2 mg/kg dose of morphine.

### Example 5

This example describes a study demonstrating effectiveness of lacosamide alone and in combination with the antidepressant duloxetine in the rat formalin paw test (late phase), as described by Wheeler-Aceto & Cowan (1991), *supra.*

### Materials and methods

Test methods were similar to those of Example 3. Lacosamide (10 mg/kg), duloxetine (8 mg/kg), a combination of lacosamide (10 mg/kg) with duloxetine (8 mg/kg), and vehicle were administered i.p. 10 minutes before injection of formalin.

### Results

Results of the test are presented in Tables 7 (number of flinches) and 8 (licking time).

**Table 7. Effect of lacosamide, duloxetine and combination on number of flinches**

| **Compound 1 (mg/kg)** | **Compound 2 (mg/kg)** | **No. of flinches** | | | | | |
|---|---|---|---|---|---|---|---|
| | | **mean ± SEM** | | | **p value** | **% change** | |
| Vehicle | Vehicle | 151.3 ± 13.7 | | | - | - | |
| Lacosamide (10) | Vehicle | 158.2 ± 15.6 | NS | (a) | 0.5963 | +5% | (a) |
| Vehicle | Duloxetine (8) | 149.6 ± 27.3 | NS | (a) | 0.7054 | -1% | (a) |
| Lacosamide (10) | Duloxetine (8) | | * | (a) | 0.0233 | -31% | (a) |
| | | 105.1 ± 11.3 | * | (b) | 0.0284 | -34% | (b) |
| | | | NS | (c) | 0.1988 | -30% | (c) |

**Table 8. Effect of lacosamide, duloxetine and combination on licking time**

| **Compound 1 (mg/kg)** | **Compound 2 (mg/kg)** | **Licking time (seconds)** | | | | | |
|---|---|---|---|---|---|---|---|
| | | **mean ± SEM** | | | **p value** | **% change** | |
| Vehicle | Vehicle | 264.2 ± 17.8 | | | - | - | |
| Lacosamide (10) | Vehicle | 185.2 ± 31.7 | NS | (a) | 0.0538 | -30% | (a) |
| Vehicle | Duloxetine (8) | 195.5 ± 45.0 | NS | (a) | 0.1615 | -26% | (a) |
| Ladosamide (10) | Duloxetine (8) | | *** | (a) | 0.0004 | -63% | (a) |
| | | 96.9 ± 24.8 | * | (b) | 0.0340 | -48% | (b) |
| | | | NS | (c) | 0.1492 | -50% | (c) |

| | | | | | | | |
|---|---|---|---|---|---|---|---|
| NS = not significant; * = p < 0.05; ** = p < 0.01; *** = p < 0.001 (a): compared with vehicle control (b): compared with lacosamide alone at the appropriate dose (c): compared with duloxetine alone at the appropriate dose | | | | | | | |

Lacosamide 10 mg/kg alone had no significant effects although it tended to decrease the time spent licking (30% decrease, p = 0.0538).

### Duloxetine 8 mg/kg alone had no clear effects.

Lacosamide 10 mg/kg combined with duloxetine 8 mg/kg significantly decreased the number of flinches, as compared with vehicle controls, by 31 % (p < 0.05). The combination decreased the time spent licking by 63% (p < 0.001). The effects of lacosamide combined with duloxetine on the number of flinches and the time spent licking were more marked than the effects of lacosamide alone (p < 0.05 to p< 0.01).

### Example 6

This example describes a study demonstrating effectiveness of lacosamide alone and in combination with the NMDA receptor antagonist memantine in the rat formalin paw test (late phase), as described by Wheeler-Aceto & Cowan (1991), *supra.*

### Materials and methods

Test methods were similar to those of Example 3. Lacosamide (10 and 20 mg/kg), memantine (4 and 8 mg/kg), combinations of lacosamide (10 and 20 mg/kg) with memantine (4 and 8 mg/kg), and vehicle were administered i.p. 10 minutes before injection of formalin.

### Results

Results of the test are presented in Tables 9 (number of flinches) and 10 (licking time).

**Table 9. Effect of lacosamide, memantine and combinations on number of flinches**

| **Compound 1 (mg/kg)** | **Compound 2 (mg/kg)** | **No. of flinches** | | | | | |
|---|---|---|---|---|---|---|---|
| | | **mean ± SEM** | | | **p value** | **% change** | |
| Vehicle | Vehicle | 165.6 ± 20.1 | | | - | - | |
| Lacosamide (10) | Vehicle | 113.9 ± 23.2 | NS | (a). | 0.0821 | -31% | (a) |
| Lacosamide (20) | Vehicle | 85.8 ± 14.4 | * | (a) | 0.0101 | -48% | (a) |
| Vehicle | Memantine (4) | 161.4 ± 26.3 | NS | (a) | 0.7052 | -3% | (a) |
| Vehicle | Memantine (8) | 132.3 ± 24.6 | NS | (a) | 0.3845 | -20% | (a) |
| Lacosamide (10) | Memantine (4) | | * | (a) | 0.0211 | -36% | (a) |
| | | 105.4 ± 16.1 | NS | (b) | 0.8205 | -7% | (b) |
| | | | NS | (c) | 0.1124 | -35% | (c) |
| Lacosamide (10) | Memantine (8) | | * | (a) | 0.0311 | -50% | (a) |
| | | 83.5 ± 23.4 | NS | (b) | 0.2568 | -27% | (b) |
| | | | NS | (c) | 0.1988 | -37% | (c) |
| Lacosamide (20) | Memantine (4) | | *** | (a) | 0.0004 | -74% | (a) |
| | | 42.5 ± 9.0 | * | (b) | 0.0257 | -50% | (b) |
| | | | *** | (c) | 0.0004 | -74% | (c) |
| Lacosamide (20) | Memantine (8) | | *** | (a) | 0.0007 | -64% | (a) |
| | | 59.6 ± 11.0 | NS | (b) | 0.1986 | -31% | (b) |
| | | | * | (c) | 00283 | -55% | (c) |

**Table 10. Effect of lacosamide, memantine and combinations on licking time**

| **Compound 1 (mg/kg)** | **Compound 2 (mg/kg)** | **Licking time (seconds)** | | | | | |
|---|---|---|---|---|---|---|---|
| | | **mean ± SEM** | | | **p value** | **% change** | |
| Vehicle | Vehicle | 176.3 ± 18.2 | | | - | - | |
| Lacosamide (10) | Vehicle | 168.5 ± 23.9 | NS | (a) | 0.8797 | -4% | (a) |
| Lacosamide (20) | Vehicle | 85.1 ± 19.1 | ** | (a) | 0.0072 | -52% | (a) |
| Vehicle | Memantine (4) | 219.9 ± 21.8 | NS | (a) | 0.0537 | +25% | (a) |
| Vehicle | Memantine (8) | 237.3 ± 18.9 | * | (a) | 0.0412 | +35% | (a) |
| Lacosamide (10) | Memantine (4) # | | NS | (a) | 0.7749 | -5% | (a) |
| | | 168.2 ± 26.1 | NS | (b) | 0.9349 | 0% | (b) |
| | | | NS | (c) | 0.1208 | -24% | (c) |
| Lacosamide (10) | Memantine (8) | | * | (a) | 0.0342 | -35% | (a) |
| | | 114.8 ± 18.8 | NS | (b) | 0.1508 | -32% | (b) |
| | | | ** | (c) | 0.0015 | -52% | (c) |
| Lacosamide (20) | Memantine (4) | | *** | (a) | 0.0002 | -69% | (a) |
| | | 54.1 ± 10.5 | NS | (b) | 0.3071 | -36% | (b) |
| | | | *** | (c) | 0.0007 | -75% | (c) |
| Lacosamide (20) | Memantine (8) | | * | (a) | 0.0191 | -49% | (a) |
| | | 90.6 ± 26.8 | NS | (b) | 0.8500 | +6% | (b) |
| | | | ** | (c) | 0.0015 | -62% | (c) |

| | | | | | | | |
|---|---|---|---|---|---|---|---|
| NS = not significant; *= p < 0.05; ** = p < 0.0; *** = p < 0.001 (a): compared with vehicle control (b): compared with lacosamide alone at the appropriate dose (c): compared with memantine alone at the appropriate dose #: missing value (1/10) | | | | | | | |

Lacosamide alone at 10 and 20 mg/kg dose-dependently decreased the number of flinches, as compared with vehicle controls, by 31% and 48% respectively, significantly so at 20 mg/kg (p < 0.05). Lacosamide clearly decreased the time spent licking at 20 mg/kg (52% decrease, p < 0.01) but had no clear effects at 10 mg/kg.

Memantine alone at 4 and 8 mg/kg did not clearly affect the number of flinches, as compared with vehicle controls. Memantine dose-dependently increased the time spent licking (25% increase, p = 0.0537 and 35% increase, p < 0.05).

Lacosamide at 10 mg/kg combined with memantine at 4 and 8 mg/kg dose-dependently decreased the number of flinches, as compared with vehicle controls, by 36% and 50% respectively (p < 0.05). The combination significantly decreased the time spent licking at 8 but not at 4 mg/kg of memantine (35% decrease, p < 0.05). The effects of lacosamide combined with memantine on the number of flinches and the time spent licking were not different from the effects of lacosamide alone.

Lacosamide at 20 mg/kg combined with memantine at 4 and 8 mg/kg clearly decreased the number of flinches, as compared with vehicle controls, by 74% and 64% respectively (p < 0.001). The combination clearly decreased the time spent licking, although in a manner inversely related to the dose of memantine (69% decrease, p < 0.001 and 49% decrease, p < 0.05, respectively). The effects of lacosamide combined with memantine at 4 mg/kg on the number of flinches but not on the time spent licking were significantly more marked than the effects of lacosamide alone (p < 0.05).

### Example 7

This example describes a study demonstrating effectiveness of lacosamide alone and in combination with naproxen in the rat formalin paw test (late phase), as described by Wheeler-Aceto & Cowan (1991), *supra.*

### Materials and methods

Test methods were similar to those of Example 3. Lacosamide (10 and 20 mg/kg), naproxen (8 and 16 mg/kg), combinations of lacosamide (10 and 20 mg/kg) with memantine (8 and 16 mg/kg), and vehicle were administered i.p. 10 minutes before injection of formalin. Morphine (8 mg/kg) was included as a comparative treatment.

### Results

Results of the test are presented in Tables 11 (number of flinches) and 12 (licking time).

**Table 11. Effect of lacosamide, naproxen and combinations on number of flinches**

| **Compound 1 (mg/kg)** | **Compound 2 (mg/kg)** | **No. of flinches** | | | | | |
|---|---|---|---|---|---|---|---|
| | | **mean ± SEM** | | | **p value** | **% change** | |
| Vehicle | Vehicle | 114.1 ± 21.7 | | | - | - | |
| Lacosamide (10) | Vehicle # | 99.2 ± 16.6 | NS | (a) | 0.6828 | -13% | (a) |
| Lacosamide (20) | Vehicle | 100.3 ± 22.3 | NS | (a) | 0.6501 | -12% | (a) |
| Vehicle | Naproxen (8) | 148.0 ± 35.5 | NS | (a) | 0.5453 | +30% | (a) |
| Vehicle | Naproxen (16) | 116.6 ± 20.7 | NS | (a) | 0.9698 | +2% | (a) |
| Lacosamide (10) | Naproxen (8) | | NS | (a) | 0.4494 | +26% | (a) |
| | | 143.5 ± 33.1 | NS | (b) | 0.4624 | +45% | (b) |
| | | | NS | (c) | 0.9698 | -3% | (c) |
| Lacosamide (10) | Naproxen (16) | | NS | (a) | 0.7336 | -9% | (a) |
| | | 103.7 ± 18.6 | NS | (b) | 0.9674 | +5% | (b) |
| | | | NS | (c) | 0.7336 | -11% | (c) |
| Lacosamide (20) | Naproxen (8) | | NS | (a) | 0.7623 | -9% | (a) |
| | | 104.2 ± 18.4 | NS | (b) | 0.9397 | +4% | (b) |
| | | | NS | (c) | 0.5202 | -30% | (c) |
| Lacosamide (20) | Naproxen (16) | | NS | (a) | 0.1403 | -32% | (a) |
| | | 77.7 ± 20.2 | NS | (b) | 0.3258 | -23% | (b) |
| | | | NS | (c) | 0.1306 | -33% | (c) |
| Morphine (8) | Vehicle | 0.2 ± 0.1 | *** | (a) | <0.000 1 | -100% | (a) |

**Table 12. Effect of lacosamide, naproxen and combinations on licking time**

| **Compound 1 (mg/kg)** | **Compound 2 (mg/kg)** | **Licking time (seconds)** | | | | | |
|---|---|---|---|---|---|---|---|
| | | **mean ± SEM** | | | **p value** | **% change** | |
| Vehicle | Vehicle | 191.1 ± 11.5 | | | - | - | |
| Lacosamide (10) | Vehicle # | 174.7 ± 20.4 | NS | (a) | 0.5401 | -9% | (a) |
| Lacosamide (20) | Vehicle | 78.9 ± 20.4 | *** | (a) | 0.0007 | -59% | (a) |
| Vehicle | Naproxen (8) | 222.1 ± 21.1 | NS | (a) | 0.3258 | +16% | (a) |
| Vehicle | Naproxen (16) | 190.1 ± 25.4 | NS | (a) | 0.6775 | -1% | (a) |
| Lacosamide (10) | Naproxen (8) | | NS | (a) | 0.7336 | -7% | (a) |
| | | 178.3 ± 31.6 | NS | (b) | 0.6242 | +2% | (b) |
| | | | NS | (c) | 0.4963 | -20% | (c) |
| Lacosamide (10) | Naproxen (16) | | * | (a) | 0.0211 | -38% | (a) |
| | | 118.3 ± 24.9 | NS | (b) | 0.1651 | -32% | (b) |
| | | | * | (c) | 0.0492 | -38% | (c) |
| Lacosamide (20) | Naproxen (8) | | NS | (a) | 0.5706 | -22% | (a) |
| | | 150.0 ± 28.2 | NS | (b) | 0.0584 | +90% | (b) |
| | | | NS | (c) | 0.0696 | -32% | (c) |
| Lacosamide 20) | Naproxen (16) | | ** | (a) | 0.0052 | -53% | (a) |
| | | 89.8 ± 22.8 | NS | (b) | 0.7620 | +14% | (b) |
| | | | * | (c) | 0.0126 | -53% | (c) |
| Morphine (8) | Vehicle | 0.0 ± 0.0 | *** | (a) | <0.0001 | -100% | (a) |

| | | | | | | | |
|---|---|---|---|---|---|---|---|
| NS = not significant; * = p < 0.05; ** = p < 0.01; *** = p < 0.001 (a): compared with vehicle control (b): compared with lacosamide alone at the appropriate dose (c): compared with naproxen alone at the appropriate dose #: missing value (1/10) | | | | | | | |

Lacosamide alone at 10 and 20 mg/kg did not clearly affect the number of flinches, as compared with vehicle controls. It clearly decreased the time spent licking at 20 mg/kg, by 59% (p < 0.001), but had no clear effects at 10 mg/kg.

Naproxen alone at 8 and 16 mg/kg did not clearly affect the number of flinches or the time spent licking, as compared with vehicle controls.

Lacosamide 10 mg/kg combined with naproxen 8 and 16 mg/kg did not clearly affect the number of flinches, as compared with vehicle controls. Lacosamide 10 mg/kg combined with naproxen at 16 but not at 8 mg/kg significantly decreased the time spent licking, by 38% (p < 0.05). The effects of lacosamide 10 mg/kg combined with naproxen on the number of flinches and the time spent licking were not different from the effects of lacosamide alone.

Lacosamide 20 mg/kg combined with naproxen 8 and 16 mg/kg did not clearly affect the number of flinches, as compared with vehicle controls. Lacosamide 20 mg/kg combined with naproxen at 16 but not 8 mg/kg significantly decreased the time spent licking, by 53% (p < 0.01). The effects of lacosamide 20 mg/kg combined with naproxen on the number of flinches and the time spent licking were not different from the effects of lacosamide alone.

Morphine alone at 8 mg/kg, administered under the same experimental conditions, eliminated flinching and the time spent licking, as compared with vehicle controls (p< 0.001).

In summary, the Examples 3 to 7 demonstrate synergistic effects between lacosamide and a compound selected from gabapentin, duloxetine, morphine, naproxen and memantine.

The words "comprise", "comprises", and "comprising" are to be interpreted inclusively rather than exclusively.

## Claims

1. A therapeutic combination comprising (a) a first agent comprising lacosamide, and (b) a second agent effective in combination with the first agent to provide enhanced treatment of pain associated with or caused by a medical condition, by comparison with lacosamide alone; said second agent comprising one or more drugs independently selected from the group consisting of duloxetine, morphine, and memantine.

2. The combination of claim 1, wherein lacosamide is substantially enantiopure.

3. The combination of claim 1 or 2, wherein the pain related to the medical condition comprises non-inflammatory pain.

4. The combination of any one of the preceding claims, wherein the medical condition is an arthritic condition and/or pain related thereto, in particular osteoarthritis and/or pain related thereto.

5. The combination of claim 4, wherein the arthritic condition comprises one or more disorders selected from the group consisting of idiopathic osteoarthritis, secondary osteoarthritis, rheumatoid arthritis, juvenile rheumatoid arthritis, psoriatic arthritis, infectious arthritis, ankylosing spondylitis, neurogenic arthropathy, polyarthralgia, and arthritis associated with Sjögren's syndrome, Behget's syndrome, Reiter's syndrome, systemic lupus erythematosus, rheumatic fever, gout, pseudogout, Lyme disease, sarcoidosis and ulcerative colitis.

6. The combination of claims 1 or 2, wherein the medical condition is painful diabetic neuropathy.

7. The combination of any one of the preceding claims, wherein the second agent is present in an amount effective, in combination with the first agent, to provides enhanced treatments of pain by comparison with the first agent alone.

8. The combination of any one of the preceding claims, wherein the first agent and the second agent are provided in separate dosage forms for administration by the same or different routes at the same or different times.

9. The combination of any one of the preceding claims, wherein at least the first agent is provided in a dosage form adapted for oral administration of one to three doses per day.

10. A pharmaceutical dosage form comprising the combination of claim 1 or 2 and at least one pharmaceutically acceptable excipient.

11. Use of a therapeutic combination as defined in any one of claims 1 to 9 for preparing a medicament for treating a painful medical condition and/or pain related thereto in a subject.

12. The use of claim 11, wherein the painful medical condition or/and pain related thereto is selected from conditions as defined in any one of the claims 3 to 6.

13. A combination comprising (a) lacosamide, and (b) duloxetine or/and a pharmaceutically acceptable salt thereof.

## Patentansprüche

1. Therapeutische Kombination, umfassend (a) ein erstes Mittel umfassend Lacosamid, und (b) ein zweites Mittel, welches in Kombination mit dem ersten Mittel wirksam ist im Vergleich zu Lacosamid allein, zur Bereitstellung einer verbesserten Behandlung von Schmerz, welcher mit einer Erkrankung assoziiert ist oder dadurch verursacht wird, wobei das zweite Mittel einen oder mehrere Wirkstoffe unabhängig ausgewählt aus der Gruppe bestehend aus Duloxetin, Morphin und Memantin umfasst.

2. Kombination gemäß Anspruch 1, wobei Lacosamid im wesentlichen enantiomerenrein ist.

3. Kombination gemäß Anspruch 1 oder 2, wobei der Schmerz, welcher mit einer Erkrankung verbunden ist, nicht-inflammatorischen Schmerz umfasst.

4. Kombination gemäß einem der vorhergehenden Ansprüche, wobei die Erkrankung eine arthritische Erkrankung und/oder damit verbundener Schmerz ist, insbesondere Osteoarthritis und/oder damit verbundener Schmerz.

5. Kombination gemäß Anspruch 4, wobei die arthritische Erkrankung eine oder mehrere Erkrankungen ausgewählt aus der Gruppe bestehend aus ideopathischer Osteoarthritis, sekundärer Osteoarthritis, rheumatoider Arthritis, juveniler rheumatoider Arthritis, psoriatischer Arthritis, infektiöser Arthritis, Spondylitis ankylosans, neurogener Arthropathie, Polyarthralgie und Arthritis assoziiert mit Sjögren-Syndrom, Behçet-Syndrom, Reiter-Syndrom, systemischem Lupus erythematosus, rheumatoidem Fieber, Gicht, Pseudogicht, Lyme-Erkrankung, Sarkoidose und Colitis ulcerosa umfasst.

6. Kombination gemäß Anspruch 1 oder 2, wobei die Erkrankung schmerzhafte diabetische Neuropathie ist.

7. Kombination gemäß einem der vorhergehenden Ansprüche, wobei das zweite Mittel in Kombination mit dem ersten Mittel in einer wirksamen Menge vorhanden ist, um im Vergleich mit dem ersten Mittel allein eine verbesserte Behandlung von Schmerz bereitzustellen.

8. Kombination gemäß einem der vorhergehenden Ansprüche, wobei das erste Mittel und das zweite Mittel als separate Dosierungsformen zur Verabreichung über denselben Weg oder verschiedene Wege gleichzeitig oder zu unterschiedlichen Zeitpunkten bereitgestellt wird.

9. Kombination gemäß einem der vorhergehenden Ansprüche, wobei wenigstens das erste Mittel in einer Dosierungsform zur oralen Verabreichung von einer bis drei Dosen pro Tag bereitgestellt wird.

10. Pharmazeutische Dosierungsform, umfassend die Kombination gemäß Anspruch 1 oder 2 und wenigstens einen pharmazeutisch akzeptablen Hilfsstoff.

11. Verwendung einer therapeutischen Kombination, wie in einem der Ansprüche 1 bis 9 definiert, zur Herstellung eines Medikaments zur Behandlung einer schmerzhaften Erkrankung und/oder Schmerz, welcher damit verbunden ist, bei einem Patienten.

12. Verwendung gemäß Anspruch 11, wobei die schmerzhafte Erkrankung oder/und der damit verbundene Schmerz ausgewählt wird aus Erkrankungen wie in einem der Ansprüche 3 bis 6 definiert.

13. Kombination, umfassend (a) Lacosamid und (b) Duloxetin oder/und ein pharmazeutisch akzeptables Salz davon.

## Revendications

1. Combinaison thérapeutique comprendant (a) un premier agent comprenant de la lacosamide, et (b) un deuxième agent efficace en combinaison avec le premier agent pour fournir un traitement amélioré des douleurs associées à ou causées par un état médical, par comparaison à la lacosamide seule, le deuxième agent comprenant un ou plusieurs médicaments indépendamment choisis dans le groupe comprenant la duloxétine, la morphine et la mémantine.

2. Combinaison selon la revendication 1, dans laquelle la lacosamide est substantiellement énantiopure.

3. Combinaison selon la revendication 1 ou 2, dans laquelle les douleurs associées à l'état médical comprennent les douleurs non inflammatoires.

4. Combinaison selon l'une quelconque des revendications précédentes, dans laquelle l'état médical est un état pathologique arthritique et/ou les douleurs qui y sont associées, en particulier l'arthrose et/ou les douleurs qui y sont associées.

5. Combinaison selon la revendication 4, dans laquelle l'état pathologique arthritique comprend un ou plusieurs troubles choisis dans le groupe comprenant l'arthrose iodopathique, l'arthrose secondaire, la polyarthrite rhumatoïde, la polyarthrite rhumatoïde juvénile, le rhumatisme psoriasique, l'arthrite infectieuse, la spondylite ankylosante, l'arthropathie nerveuse, la polyarthralgie, et l'arthrite associée au syndrome de Sjögren, au syndrome de Behçet, au syndrome de Reiter, le lupus érythémateux systémique, le rhumatisme articulaire aigu, la goutte, la pseudo-goutte, la maladie de Lyme, la sarcoïdose et la rectocolite hémorragique.

6. Combinaison selon la revendication 1 ou 2, dans laquelle l'état médical est la neuropathie diabétique douloureuse.

7. Combinaison selon l'une quelconque des revendications précédentes, dans laquelle le deuxième agent est présent dans une quantité efficace, en combinaison avec le premier agent, pour fournir un traitement amélioré des douleurs par comparaison au traitement à l'aide du premier agent seul.

8. Combinaison selon l'une quelconque des revendications précédentes, dans laquelle le premier agent et le deuxième agent sont fournis sous des formes de dosage séparées pour administration par les mêmes voies ou des voies différentes au même moment ou à des moments différents.

9. Combinaison selon l'une quelconque des revendications précédentes, dans laquelle au moins le premier agent est fourni sous une forme de dosage adaptée à l'administration orale d'une à trois doses par jour.

10. Dosage pharmaceutique comprenant la combinaison selon la revendication 1 ou 2 et au moins un excipient acceptable du point de vue pharmaceutique.

11. Utilisation d'une combinaison thérapeutique telle que définie selon l'une quelconque des revendications 1 à 9 en vue de la préparation d'un médicament pour le traitement chez un sujet d'un état médical douloureux et/ou de douleurs qui y sont associées.

12. Utilisation selon la revendication 11, dans laquelle l'état médical douloureux et/ou les douleurs qui y sont associées sont choisis parmi les états médicaux tels que définis selon l'une quelconque des revendications 3 à 6.

13. Combinaison comprenant (a) de la lacosamide, et (b) de la duloxétine et/ou un sel acceptable du point de vue pharmaceutique de celle-ci.
